# EUROPEAN PATENT SPECIFICATION

(11) **EP 2 914 131 B1**
(45) Date of publication and mention of the grant of the patent: **28.11.2018**
(21) Application number: 13786222.3
(22) Date of filing: 31.10.2013
(51) Int. Cl.: A23L 27/00, A23K 20/121, A23K 20/142, A23K 20/153, A23K 50/40

(54) **FLAVOUR ADDITIVES**
GESCHMACKSZUSATZSTOFFE
ADDITIFS AROMATIQUES

(30) Priority: 31.10.2012 EP 12190888
(43) Date of publication of application: 09.09.2015
(73) Proprietor: Mars, Incorporated, McLean, VA 22101 (US)
(72) Inventor: TAYLOR, Andrew, Melton Mowbray Leicestershire LE14 4RT (GB); MCGRANE, Scott, Melton Mowbray Leicestershire LE14 4RT (GB)
(74) Representative: Cockerton, Bruce Roger
(86) International application number: PCT/EP2013/072789
(87) International publication number: WO 2014/068044

(56) References cited:
- WO-A2-2005/053421
- JP-A- 2000 253 847
- US-A- 3 524 747
- US-A- 4 267 195
- US-A1- 2003 232 407
- DATABASE WPI Week 200962 Thomson Scientific, London, GB; AN 2009-N34612 XP002697328, & CN 101 513 227 A (HEILONGJIANG FISHERIES INST CHINESE ACAD) 26 August 2009 (2009-08-26)
- DATABASE WPI Week 200944 Thomson Scientific, London, GB; AN 2009-H44303 XP002697329, & CN 101 401 621 A (UNIV ZHEJIANG OCEAN) 8 April 2009 (2009-04-08)
- YOSHII K ET AL: "Synergistic effects of 5'-nucleotides on rat taste responses to various amino acids", BRAIN RESEARCH, ELSEVIER, AMSTERDAM, NL, vol. 367, no. 1-2, 5 March 1986 (1986-03-05), pages 45-51, XP024279385, ISSN: 0006-8993, DOI: 10.1016/0006-8993(86)91577-5 [retrieved on 1986-03-05]

### SEQUENCE LISTING

<110> Mars Incorporated
<120> Flavour additives
<130> P55639EP/AC
<140> EP12190888.3
   <141> 2012-10-31
<160> 5
<170> PatentIn version 3.5
<210> 1
   <211> 842
   <212> PRT
   <213> Mus musculus
<400> 1
   Met Leu Phe Trp Ala Ala His Leu Leu Leu Ser Leu Gln Leu Ala Val
   1               5                   10                  15
   Ala Tyr Cys Trp Ala Phe Ser Cys Gln Arg Thr Glu Ser Ser Pro Gly
               20                  25                  30
   Phe Ser Leu Pro Gly Asp Phe Leu Leu Ala Gly Leu Phe Ser Leu His
           35                  40                  45
   Ala Asp Cys Leu Gln Val Arg His Arg Pro Leu Val Thr Ser Cys Asp
       50                  55                  60
   Arg Ser Asp Ser Phe Asn Gly His Gly Tyr His Leu Phe Gln Ala Met
   65                  70                  75                  80
   Arg Phe Thr Val Glu Glu Ile Asn Asn Ser Thr Ala Leu Leu Pro Asn
                   85                  90                  95
   Ile Thr Leu Gly Tyr Glu Leu Tyr Asp Val Cys Ser Glu Ser Ser Asn
               100                 105                 110
   Val Tyr Ala Thr Leu Arg Val Leu Ala Gln Gln Gly Thr Gly His Leu
           115                 120                 125
   Glu Met Gln Arg Asp Leu Arg Asn His Ser Ser Lys Val Val Ala Leu
       130                 135                 140
   Ile Gly Pro Asp Asn Thr Asp His Ala Val Thr Thr Ala Ala Leu Leu
   145                 150                 155                 160
   Ser Pro Phe Leu Met Pro Leu Val Ser Tyr Glu Ala Ser Ser Val Ile
                   165                 170                 175
   Leu Ser Gly Lys Arg Lys Phe Pro Ser Phe Leu Arg Thr Ile Pro Ser
               180                 185                 190
   Asp Lys Tyr Gln Val Glu Val Ile Val Arg Leu Leu Gln Ser Phe Gly
           195                 200                 205
   Trp Val Trp Ile Ser Leu Val Gly Ser Tyr Gly Asp Tyr Gly Gln Leu
       210                 215                 220
   Gly Val Gln Ala Leu Glu Glu Leu Ala Thr Pro Arg Gly Ile Cys Val
   225                 230                 235                 240
   Ala Phe Lys Asp Val Val Pro Leu Ser Ala Gln Ala Gly Asp Pro Arg
                   245                 250                 255
   Met Gln Arg Met Met Leu Arg Leu Ala Arg Ala Arg Thr Thr Val Val
               260                 265                 270
   Val Val Phe Ser Asn Arg His Leu Ala Gly Val Phe Phe Arg Ser Val
           275                 280                 285
   Val Leu Ala Asn Leu Thr Gly Lys Val Trp Ile Ala Ser Glu Asp Trp
       290                 295                 300
   Ala Ile Ser Thr Tyr Ile Thr Asn Val Pro Gly Ile Gln Gly Ile Gly
   305                 310                 315                 320
   Thr Val Leu Gly Val Ala Ile Gln Gln Arg Gln Val Pro Gly Leu Lys
                   325                 330                 335
   Glu Phe Glu Glu Ser Tyr Val Gln Ala Val Met Gly Ala Pro Arg Thr
               340                 345                 350
   Cys Pro Glu Gly Ser Trp Cys Gly Thr Asn Gln Leu Cys Arg Glu Cys
           355                 360                 365
   His Ala Phe Thr Thr Trp Asn Met Pro Glu Leu Gly Ala Phe Ser Met
       370                 375                 380
   Ser Ala Ala Tyr Asn Val Tyr Glu Ala Val Tyr Ala Val Ala His Gly
   385                 390                 395                 400
   Leu His Gln Leu Leu Gly Cys Thr Ser Gly Thr Cys Ala Arg Gly Pro
                   405                 410                 415
   Val Tyr Pro Trp Gln Leu Leu Gln Gln Ile Tyr Lys Val Asn Phe Leu
               420                 425                 430
   Leu His Lys Lys Thr Val Ala Phe Asp Asp Lys Gly Asp Pro Leu Gly
           435                 440                 445
   Tyr Tyr Asp Ile Ile Ala Trp Asp Trp Asn Gly Pro Glu Trp Thr Phe
       450                 455                 460
   Glu Val Ile Gly Ser Ala Ser Leu Ser Pro Val His Leu Asp Ile Asn
   465                 470                 475                 480
   Lys Thr Lys Ile Gln Trp His Gly Lys Asn Asn Gln Val Pro Val Ser
                   485                 490                 495
   Val Cys Thr Arg Asp Cys Leu Glu Gly His His Arg Leu Val Met Gly
               500                 505                 510
   Ser His His Cys Cys Phe Glu Cys Met Pro Cys Glu Ala Gly Thr Phe
           515                 520                 525
   Leu Asn Thr Ser Glu Leu His Thr Cys Gln Pro Cys Gly Thr Glu Glu
       530                 535                 540
   Trp Ala Pro Glu Gly Ser Ser Ala Cys Phe Ser Arg Thr Val Glu Phe
   545                 550                 555                 560
   Leu Gly Trp His Glu Pro Ile Ser Leu Val Leu Leu Ala Ala Asn Thr
                   565                 570                 575
   Leu Leu Leu Leu Leu Leu Ile Gly Thr Ala Gly Leu Phe Ala Trp Arg
               580                 585                 590
   Leu His Thr Pro Val Val Arg Ser Ala Gly Gly Arg Leu Cys Phe Leu
           595                 600                 605
   Met Leu Gly Ser Leu Val Ala Gly Ser Cys Ser Leu Tyr Ser Phe Phe
       610                 615                 620
   Gly Lys Pro Thr Val Pro Ala Cys Leu Leu Arg Gln Pro Leu Phe Ser
   625                 630                 635                 640
   Leu Gly Phe Ala Ile Phe Leu Ser Cys Leu Thr Ile Arg Ser Phe Gln
                   645                 650                 655
   Leu Val Ile Ile Phe Lys Phe Ser Thr Lys Val Pro Thr Phe Tyr His
               660                 665                 670
   Thr Trp Ala Gln Asn His Gly Ala Gly Ile Phe Val Ile Val Ser Ser
   675 680 685
   Thr Val His Leu Phe Leu Cys Leu Thr Trp Leu Ala Met Trp Thr Pro
   690 695 700
   Arg Pro Thr Arg Glu Tyr Gln Arg Phe Pro His Leu Val Ile Leu Glu
   705 710 715 720
   Cys Thr Glu Val Asn Ser Val Gly Phe Leu Val Ala Phe Ala His Asn
   725 730 735
   Ile Leu Leu Ser Ile Ser Thr Phe Val Cys Ser Tyr Leu Gly Lys Glu
   740 745 750
   Leu Pro Glu Asn Tyr Asn Glu Ala Lys Cys Val Thr Phe Ser Leu Leu
   755 760 765
   Leu His Phe Val Ser Trp Ile Ala Phe Phe Thr Met Ser Ser Ile Tyr
   770 775 780
   Gln Gly Ser Tyr Leu Pro Ala Val Asn Val Leu Ala Gly Leu Ala Thr
   785 790 795 800
   Leu Ser Gly Gly Phe Ser Gly Tyr Phe Leu Pro Lys Cys Tyr Val Ile
   805 810 815
   Leu Cys Arg Pro Glu Leu Asn Asn Thr Glu His Phe Gln Ala Ser Ile
   820 825 830
   Gln Asp Tyr Thr Arg Arg Cys Gly Thr Thr
   835 840
<210> 2
   <211> 840
   <212> PRT
   <213> Rattus rattus
<400> 2
   Met Leu Phe Trp Ala Ala His Leu Leu Leu Ser Leu Gln Leu Val Tyr
   1 5 10 15
   Cys Trp Ala Phe Ser Cys Gln Arg Thr Glu Ser Ser Pro Gly Phe Ser
   20 25 30
   Leu Pro Gly Asp Phe Leu Leu Ala Gly Leu Phe Ser Leu His Gly Asp
   35 40 45
   Cys Leu Gln Val Arg His Arg Pro Leu Val Thr Ser Cys Asp Arg Ser
       50                  55                  60
   Asp Ser Phe Asn Gly His Gly Tyr His Leu Phe Gln Ala Met Arg Phe
   65                  70                  75                  80
   Thr Val Glu Glu Ile Asn Asn Ser Thr Ala Leu Leu Pro Asn Ile Thr
                   85                  90                  95
   Leu Gly Tyr Glu Leu Tyr Asp Val Cys Ser Glu Ser Ser Asn Val Tyr
               100                 105                 110
   Ala Thr Leu Arg Val Leu Ala Gln Gln Gly Thr Gly His Leu Glu Met
           115                 120                 125
   Gln Arg Asp Leu Arg Asn His Ser Ser Lys Val Val Ala Leu Ile Gly
       130                 135                 140
   Pro Asp Asn Thr Asp His Ala Val Thr Thr Ala Ala Leu Leu Ser Pro
   145                 150                 155                 160
   Phe Leu Met Pro Leu Val Ser Tyr Glu Ala Ser Ser Val Ile Leu Ser
                   165                 170                 175
   Gly Lys Arg Lys Phe Pro Ser Phe Leu Arg Thr Ile Pro Ser Asp Lys
               180                 185                 190
   Tyr Gln Val Glu Val Ile Val Arg Leu Leu Gln Ser Phe Gly Trp Val
           195                 200                 205
   Trp Ile Ser Leu Val Gly Ser Tyr Gly Asp Tyr Gly Gln Leu Gly Val
       210                 215                 220
   Gln Ala Leu Glu Glu Leu Ala Thr Pro Arg Gly Ile Cys Val Ala Phe
   225                 230                 235                 240
   Lys Asp Val Val Pro Leu Ser Ala Gln Ala Gly Asp Pro Arg Met Gln
                   245                 250                 255
   Arg Met Met Leu Arg Leu Ala Arg Ala Arg Thr Thr Val Val Val Val
               260                 265                 270
   Phe Ser Asn Arg His Leu Ala Gly Val Phe Phe Arg Ser Val Val Leu
           275                 280                 285
   Ala Asn Leu Thr Gly Lys Val Trp Ile Ala Ser Glu Asp Trp Ala Ile
       290                 295                 300
   Ser Thr Tyr Ile Thr Asn Val Pro Gly Ile Gln Gly Ile Gly Thr Val
   305                 310                 315                 320
   Leu Gly Val Ala Ile Gln Gln Arg Gln Val Pro Gly Leu Lys Glu Phe
                   325                 330                 335
   Glu Glu Ser Tyr Val Gln Ala Val Met Gly Ala Pro Arg Thr Cys Pro
               340                 345                 350
   Glu Gly Ser Trp Cys Gly Thr Asn Gln Leu Cys Arg Glu Cys His Ala
           355                 360                 365
   Phe Thr Thr Trp Asn Met Pro Glu Leu Gly Ala Phe Ser Met Ser Ala
       370                 375                 380
   Ala Tyr Asn Val Tyr Glu Ala Val Tyr Ala Val Ala His Gly Leu His
   385                 390                 395                 400
   Gln Leu Leu Gly Cys Thr Ser Gly Thr Cys Ala Arg Gly Pro Val Tyr
                   405                 410                 415
   Pro Trp Gln Leu Leu Gln Gln Ile Tyr Lys Val Asn Phe Leu Leu His
               420                 425                 430
   Lys Lys Thr Val Ala Phe Asp Asp Lys Gly Asp Pro Leu Gly Tyr Tyr
           435                 440                 445
   Asp Ile Ile Ala Trp Asp Trp Asn Gly Pro Glu Trp Thr Phe Glu Val
       450                 455                 460
   Ile Gly Ser Ala Ser Leu Ser Pro Val His Leu Asp Ile Asn Lys Thr
   465                 470                 475                 480
   Lys Ile Gln Trp His Gly Lys Asn Asn Gln Val Pro Val Ser Val Cys
                   485                 490                 495
   Thr Arg Asp Cys Leu Glu Gly His His Arg Leu Val Met Gly Ser His
               500                 505                 510
   His Cys Cys Phe Glu Cys Met Pro Cys Glu Ala Gly Thr Phe Leu Asn
           515                 520                 525
   Thr Ser Glu Leu His Thr Cys Gln Pro Cys Gly Thr Glu Glu Trp Ala
       530                 535                 540
   Pro Glu Gly Ser Ser Ala Cys Phe Ser Arg Thr Val Glu Phe Leu Gly
   545                 550                 555                 560
   Trp His Glu Pro Ile Ser Leu Val Leu Leu Ala Ala Asn Thr Leu Leu
                   565                 570                 575
   Leu Leu Leu Leu Ile Gly Thr Ala Gly Leu Phe Ala Trp Arg Leu His
               580                 585                 590
   Thr Pro Val Val Arg Ser Ala Gly Gly Arg Leu Cys Phe Leu Met Leu
           595                 600                 605
   Gly Ser Leu Val Ala Gly Ser Cys Ser Leu Tyr Ser Phe Phe Gly Lys
       610                 615                 620
   Pro Thr Val Pro Ala Cys Leu Leu Arg Gln Pro Leu Phe Ser Leu Gly
   625                 630                 635                 640
   Phe Ala Ile Phe Leu Ser Cys Leu Thr Ile Arg Ser Phe Gln Leu Val
                   645                 650                 655
   Ile Ile Phe Lys Phe Ser Thr Lys Val Pro Thr Phe Tyr His Thr Trp
               660                 665                 670
   Ala Gln Asn His Gly Ala Gly Ile Phe Val Ile Val Ser Ser Thr Val
           675                 680                 685
   His Leu Phe Leu Cys Leu Thr Trp Leu Ala Met Trp Thr Pro Arg Pro
       690                 695                 700
   Thr Arg Glu Tyr Gln Arg Phe Pro His Leu Val Ile Leu Glu Cys Thr
   705                 710                 715                 720
   Glu Val Asn Ser Val Gly Phe Leu Val Ala Phe Ala His Asn Ile Leu
                   725                 730                 735
   Leu Ser Ile Ser Thr Phe Val Cys Ser Tyr Leu Gly Lys Glu Leu Pro
               740                 745                 750
   Glu Asn Tyr Asn Glu Ala Lys Cys Val Thr Phe Ser Leu Leu Leu His
           755                 760                 765
   Phe Val Ser Trp Ile Ala Phe Phe Thr Met Ser Ser Ile Tyr Gln Gly
       770                 775                 780
   Ser Tyr Leu Pro Ala Val Asn Val Leu Ala Gly Leu Ala Thr Leu Ser
   785                 790                 795                 800
   Gly Gly Phe Ser Gly Tyr Phe Leu Pro Lys Cys Tyr Val Ile Leu Cys
                   805                 810                 815
   Arg Pro Glu Leu Asn Asn Thr Glu His Phe Gln Ala Ser Ile Gln Asp
               820                 825                 830
   Tyr Thr Arg Arg Cys Gly Thr Thr
           835                 840
<210> 3
   <211> 841
   <212> PRT
   <213> Homo sapiens
<400> 3
   Met Leu Leu Cys Thr Ala Arg Leu Val Gly Leu Gln Leu Leu Ile Ser
   1               5                   10                  15
   Cys Cys Trp Ala Phe Ala Cys His Ser Thr Glu Ser Ser Pro Asp Phe
               20                  25                  30
   Thr Leu Pro Gly Asp Tyr Leu Leu Ala Gly Leu Phe Pro Leu His Ser
           35                  40                  45
   Gly Cys Leu Gln Val Arg His Arg Pro Glu Val Thr Leu Cys Asp Arg
       50                  55                  60
   Ser Cys Ser Phe Asn Glu His Gly Tyr His Leu Phe Gln Ala Met Arg
   65                  70                  75                  80
   Leu Gly Val Glu Glu Ile Asn Asn Ser Thr Ala Leu Leu Pro Asn Ile
                   85                  90                  95
   Thr Leu Gly Tyr Gln Leu Tyr Asp Val Cys Ser Asp Ser Ala Asn Val
               100                 105                 110
   Tyr Ala Thr Leu Arg Val Leu Ser Leu Pro Gly Gln His His Ile Glu
           115                 120                 125
   Leu Gln Gly Asp Leu Leu His Tyr Ser Pro Thr Val Leu Ala Val Ile
       130                 135                 140
   Gly Pro Asp Ser Thr Asn Arg Ala Ala Thr Thr Ala Ala Leu Leu Ser
   145                 150                 155                 160
   Pro Phe Leu Val Pro Met Ile Ser Tyr Ala Ala Ser Ser Glu Thr Leu
                   165                 170                 175
   Ser Val Lys Arg Gln Tyr Pro Ser Phe Leu Arg Thr Ile Pro Asn Asp
   180 185 190
   Lys Tyr Gln Val Glu Thr Met Val Leu Leu Leu Gln Lys Phe Gly Trp
   195 200 205
   Thr Trp Ile Ser Leu Val Gly Ser Ser Asp Asp Tyr Gly Gln Leu Gly
   210 215 220
   Val Gln Ala Leu Glu Asn Gln Ala Thr Gly Gln Gly Ile Cys Ile Ala
   225 230 235 240
   Phe Lys Asp Ile Met Pro Phe Ser Ala Gln Val Gly Asp Glu Arg Met
   245 250 255
   Gln Cys Leu Met Arg His Leu Ala Gln Ala Gly Ala Thr Val Val Val
   260 265 270
   Val Phe Ser Ser Arg Gln Leu Ala Arg Val Phe Phe Glu Ser Val Val
   275 280 285
   Leu Thr Asn Leu Thr Gly Lys Val Trp Val Ala Ser Glu Ala Trp Ala
   290 295 300
   Leu Ser Arg His Ile Thr Gly Val Pro Gly Ile Gln Arg Ile Gly Met
   305 310 315 320
   Val Leu Gly Val Ala Ile Gln Lys Arg Ala Val Pro Gly Leu Lys Ala
   325 330 335
   Phe Glu Glu Ala Tyr Ala Arg Ala Asp Lys Lys Ala Pro Arg Pro Cys
   340 345 350
   His Lys Gly Ser Trp Cys Ser Ser Asn Gln Leu Cys Arg Glu Cys Gln
   355 360 365
   Ala Phe Met Ala His Thr Met Pro Lys Leu Lys Ala Phe Ser Met Ser
   370 375 380
   Ser Ala Tyr Asn Ala Tyr Arg Ala Val Tyr Ala Val Ala His Gly Leu
   385 390 395 400
   His Gln Leu Leu Gly Cys Ala Ser Gly Ala Cys Ser Arg Gly Arg Val
   405 410 415
   Tyr Pro Trp Gln Leu Leu Glu Gln Ile His Lys Val His Phe Leu Leu
   420 425 430
   His Lys Asp Thr Val Ala Phe Asn Asp Asn Arg Asp Pro Leu Ser Ser
           435                 440                 445
   Tyr Asn Ile Ile Ala Trp Asp Trp Asn Gly Pro Lys Trp Thr Phe Thr
       450                 455                 460
   Val Leu Gly Ser Ser Thr Trp Ser Pro Val Gln Leu Asn Ile Asn Glu
   465                 470                 475                 480
   Thr Lys Ile Gln Trp His Gly Lys Asp Asn Gln Val Pro Lys Ser Val
                   485                 490                 495
   Cys Ser Ser Asp Cys Leu Glu Gly His Gln Arg Val Val Thr Gly Phe
               500                 505                 510
   His His Cys Cys Phe Glu Cys Val Pro Cys Gly Ala Gly Thr Phe Leu
           515                 520                 525
   Asn Lys Ser Asp Leu Tyr Arg Cys Gln Pro Cys Gly Lys Glu Glu Trp
       530                 535                 540
   Ala Pro Glu Gly Ser Gln Thr Cys Phe Pro Arg Thr Val Val Phe Leu
   545                 550                 555                 560
   Ala Leu Arg Glu His Thr Ser Trp Val Leu Leu Ala Ala Asn Thr Leu
                   565                 570                 575
   Leu Leu Leu Leu Leu Leu Gly Thr Ala Gly Leu Phe Ala Trp His Leu
               580                 585                 590
   Asp Thr Pro Val Val Arg Ser Ala Gly Gly Arg Leu Cys Phe Leu Met
           595                 600                 605
   Leu Gly Ser Leu Ala Ala Gly Ser Gly Ser Leu Tyr Gly Phe Phe Gly
       610                 615                 620
   Glu Pro Thr Arg Pro Ala Cys Leu Leu Arg Gln Ala Leu Phe Ala Leu
   625                 630                 635                 640
   Gly Phe Thr Ile Phe Leu Ser Cys Leu Thr Val Arg Ser Phe Gln Leu
                   645                 650                 655
   Ile Ile Ile Phe Lys Phe Ser Thr Lys Val Pro Thr Phe Tyr His Ala
               660                 665                 670
   Trp Val Gln Asn His Gly Ala Gly Leu Phe Val Met Ile Ser Ser Ala
           675                 680                 685
   Ala Gln Leu Leu Ile Cys Leu Thr Trp Leu Val Val Trp Thr Pro Leu
       690                 695                 700
   Pro Ala Arg Glu Tyr Gln Arg Phe Pro His Leu Val Met Leu Glu Cys
   705                 710                 715                 720
   Thr Glu Thr Asn Ser Leu Gly Phe Ile Leu Ala Phe Leu Tyr Asn Gly
                   725                 730                 735
   Leu Leu Ser Ile Ser Ala Phe Ala Cys Ser Tyr Leu Gly Lys Asp Leu
               740                 745                 750
   Pro Glu Asn Tyr Asn Glu Ala Lys Cys Val Thr Phe Ser Leu Leu Phe
           755                 760                 765
   Asn Phe Val Ser Trp Ile Ala Phe Phe Thr Thr Ala Ser Val Tyr Asp
       770                 775                 780
   Gly Lys Tyr Leu Pro Ala Ala Asn Met Met Ala Gly Leu Ser Ser Leu
   785                 790                 795                 800
   Ser Ser Gly Phe Gly Gly Tyr Phe Leu Pro Lys Cys Tyr Val Ile Leu
                   805                 810                 815
   Cys Arg Pro Asp Leu Asn Ser Thr Glu His Phe Gln Ala Ser Ile Gln
               820                 825                 830
   Asp Tyr Thr Arg Arg Cys Gly Ser Thr
           835                 840
<210> 4
   <211> 841
   <212> PRT
   <213> Canis familiaris
<400> 4
   Met Ser Leu Leu Ala Ala His Leu Val Ser Leu Gln Leu Ser Leu Ser
   1               5                   10                  15
   Cys Cys Trp Ala Leu Ser Cys His Asn Thr Glu Ser Ser Pro Asp Phe
               20                  25                  30
   Ser Leu Pro Gly Asp Tyr Leu Leu Ala Gly Leu Phe Pro Leu His Ser
           35                  40                  45
   Asp Cys Pro Gly Val Arg Arg Arg Pro Met Val Thr Leu Cys Asp Arg
       50                  55                  60
   Pro Asn Ser Phe Asn Gly His Gly Tyr His Leu Phe Gln Ala Met Arg
   65                  70                  75                  80
   Phe Gly Ile Glu Glu Ile Asn Asn Ser Thr Thr Leu Leu Pro Asn Val
                   85                  90                  95
   Thr Leu Gly Tyr Gln Leu Tyr Asp Val Cys Ser Glu Ser Ala Asn Val
               100                 105                 110
   Tyr Ala Thr Leu Asn Val Leu Ser Thr Leu Gly Thr His His Ile Glu
           115                 120                 125
   Ile Gln Ala Asp Pro Ser His Tyr Ser Pro Ala Ala Leu Ala Val Ile
       130                 135                 140
   Gly Pro Asp Thr Thr Asn His Ala Ala Thr Ala Ala Ala Leu Leu Ser
   145                 150                 155                 160
   Pro Phe Leu Val Pro Val Ile Ser Tyr Glu Ala Ser Ser Val Met Leu
                   165                 170                 175
   Gly Val Lys Arg Tyr Tyr Pro Ser Phe Leu Arg Thr Ile Pro Ser Asp
               180                 185                 190
   Lys Tyr Gln Val Glu Ile Met Val Leu Leu Leu Gln Arg Phe Gly Trp
           195                 200                 205
   Val Trp Ile Ser Leu Val Gly Ser Asp Gly Asp Tyr Gly Gln Leu Gly
       210                 215                 220
   Val Gln Ala Leu Glu Glu Gln Ala Thr Gln Gln Gly Ile Cys Ile Ala
   225                 230                 235                 240
   Phe Lys Asp Ile Ile Pro Phe Ser Ala Gln Pro Gly Asn Glu Arg Met
                   245                 250                 255
   Gln Ser Met Met Tyr His Leu Asp Arg Ala Arg Thr Thr Val Val Val
               260                 265                 270
   Val Phe Ser Ser Arg Gln Leu Ala Arg Val Phe Phe Glu Ser Val Val
           275                 280                 285
   Leu Ala Lys Leu Thr Ala Lys Val Trp Ile Ala Ser Glu Asp Trp Ala
       290                 295                 300
   Ile Ser Arg His Ile Ser Ser Leu Pro Arg Ile Trp Gly Ile Gly Thr
   305 310 315 320
   Val Leu Gly Val Ala Ile Gln Gln Lys Leu Val Pro Gly Leu Lys Glu
   325 330 335
   Phe Glu Glu Ala Tyr Val Arg Ala Lys Lys Ala Ala His Arg Pro Cys
   340 345 350
   Ser Arg Asp Ser Trp Cys Ser Ser Asn Gln Leu Cys Arg Glu Cys Gln
   355 360 365
   Ala Phe Thr Val Gln Gln Met Pro Thr Leu Gly Ala Phe Ser Met Ser
   370 375 380
   Ser Ala Tyr Asn Ala Tyr Arg Ala Val Tyr Ala Ala Ala His Gly Leu
   385 390 395 400
   His Gln Leu Leu Gly Cys Ala Ser Gly Ala Cys Ser Arg Asp Arg Val
   405 410 415
   Tyr Pro Trp Gln Leu Leu Glu Gln Ile Arg Lys Val Asn Phe Leu Leu
   420 425 430
   His Glu Asp Thr Val Ile Phe Asn Asp Asn Gly Asp Pro Leu Ser Gly
   435 440 445
   Tyr Asp Ile Ile Ala Trp Asp Trp Ser Gly Pro Lys Trp Thr Phe Arg
   450 455 460
   Val Ile Gly Ser Ser Thr Trp Pro Pro Val Gln Leu Asp Ile Asn Lys
   465 470 475 480
   Thr Lys Ile Arg Trp His Gly Glu Asp Asn Gln Val Pro Glu Ser Val
   485 490 495
   Cys Ser Ser Asn Cys Leu Glu Gly His Gln Arg Val Val Val Gly Phe
   500 505 510
   Tyr His Cys Cys Phe Glu Cys Val Pro Cys Glu Ala Gly Thr Phe Leu
   515 520 525
   Asn Lys Ser Asp Leu His Ser Cys Gln Pro Cys Gly Lys Glu Glu Trp
   530 535 540
   Ala Pro Glu Gly Ser Glu Ser Cys Phe Leu Arg Thr Val Val Phe Leu
   545 550 555 560
   Thr Trp His Glu Pro Ile Ser Trp Val Leu Leu Ala Ala Asn Thr Leu
   565 570 575
   Leu Leu Leu Leu Val Ala Gly Thr Ala Gly Leu Phe Ala Trp His Leu
   580 585 590
   Asp Thr Pro Val Val Arg Ser Ala Gly Gly Arg Leu Cys Phe Phe Met
   595 600 605
   Leu Gly Ser Leu Ala Gly Gly Ser Cys Gly Leu Tyr Gly Phe Phe Gly
   610 615 620
   Glu Pro Thr Leu Ala Thr Cys Leu Leu Arg Gln Gly Leu Phe Ala Leu
   625 630 635 640
   Gly Phe Ala Ile Phe Leu Ser Cys Leu Thr Ile Arg Ser Phe Gln Leu
   645 650 655
   Val Phe Ile Phe Lys Phe Ser Ala Lys Val Pro Thr Phe Tyr Gln Ala
   660 665 670
   Trp Val Gln Asn His Gly Pro Arg Leu Phe Val Val Ile Ser Ser Met
   675 680 685
   Ala Gln Leu Leu Ile Cys Val Thr Trp Leu Ala Val Trp Thr Pro Leu
   690 695 700
   Pro Thr Arg Glu Tyr Gln Arg Phe Pro Gln Leu Val Val Leu Asp Cys
   705 710 715 720
   Thr Glu Ala Asn Ser Pro Gly Phe Met Val Ala Phe Ala Tyr Asn Gly
   725 730 735
   Leu Leu Ser Val Ser Ala Phe Ala Cys Ser Tyr Leu Gly Lys Asp Leu
   740 745 750
   Pro Glu Asn Tyr Asn Glu Ala Lys Cys Val Thr Phe Ser Leu Leu Phe
   755 760 765
   Asn Phe Val Ser Trp Ile Ala Phe Phe Thr Thr Ala Ser Val Tyr Asp
   770 775 780
   Gly Lys Tyr Leu Pro Ala Ala Asn Met Met Ala Gly Leu Ser Ser Leu
   785 790 795 800
   Ser Ser Gly Phe Ser Gly Tyr Phe Leu Pro Lys Cys Tyr Val Ile Leu
   805 810 815
   Cys Arg Pro Asp Leu Asn Ser Thr Glu His Phe Gln Ala Ser Ile Gln
               820                 825                 830
   Asp Tyr Thr Arg Arg Cys Gly Ser Thr
           835                 840
<210> 5
   <211> 718
   <212> PRT
   <213> Felis catus
<220>
   <221> misc_feature
   <222> (64)..(166)
   <223> Xaa can be any naturally occurring amino acid
<400> 5
   Met Ser Leu Pro Ala Ala His Leu Val Gly Leu Gln Leu Ser Leu Ser
   1               5                   10                  15
   Cys Cys Trp Ala Leu Ser Cys His Ser Thr Glu Thr Ser Ala Asp Phe
               20                  25                  30
   Ser Leu Pro Gly Asp Tyr Leu Leu Ala Gly Leu Phe Pro Leu His Ser
           35                  40                  45
   Asp Cys Pro Gly Val Arg His Arg Pro Thr Val Thr Leu Cys Asp Xaa
       50                  55                  60
   Xaa Xaa Xaa Xaa Xaa Xaa Xaa Xaa Xaa Xaa Xaa Xaa Xaa Xaa Xaa Xaa
   65                  70                  75                  80
   Xaa Xaa Xaa Xaa Xaa Xaa Xaa Xaa Xaa Xaa Xaa Xaa Xaa Xaa Xaa Xaa
                   85                  90                  95
   Xaa Xaa Xaa Xaa Xaa Xaa Xaa Xaa Xaa Xaa Xaa Xaa Xaa Xaa Xaa Xaa
               100                 105                 110
   Xaa Xaa Xaa Xaa Xaa Xaa Xaa Xaa Xaa Xaa Xaa Xaa Xaa Xaa Xaa Xaa
           115                 120                 125
   Xaa Xaa Xaa Xaa Xaa Xaa Xaa Xaa Xaa Xaa Xaa Xaa Xaa Xaa Xaa Xaa
       130                 135                 140
   Xaa Xaa Xaa Xaa Xaa Xaa Xaa Xaa Xaa Xaa Xaa Xaa Xaa Xaa Xaa Xaa
   145                 150                 155                 160
   Xaa Xaa Xaa Xaa Xaa Xaa Ile Ser Tyr Glu Ala Ser Ser Val Thr Leu
                   165                 170                 175
   Gly Val Lys Arg His Tyr Pro Ser Phe Leu Arg Thr Ile Pro Ser Asp
               180                 185                 190
   Lys His Gln Val Glu Ala Met Val Leu Leu Leu Gln Ser Phe Gly Trp
           195                 200                 205
   Val Trp Ile Ser Val Val Gly Ser Asp Gly Asp Tyr Gly Gln Leu Gly
       210                 215                 220
   Val Gln Ala Leu Glu Glu Gln Ala Thr Gln Gln Gly Ile Cys Val Ala
   225                 230                 235                 240
   Phe Lys Asp Ile Ile Pro Phe Ser Ala Arg Pro Gly Asp Glu Arg Met
                   245                 250                 255
   Gln Gly Ile Met His His Leu Ala Arg Ala Arg Thr Thr Val Val Val
               260                 265                 270
   Val Phe Ser Ser Arg Gln Leu Ala Arg Val Phe Phe Glu Ser Val Val
           275                 280                 285
   Leu Ala Asn Leu Thr Ala Lys Val Trp Ile Ala Ser Glu Asp Trp Ala
       290                 295                 300
   Ile Ser Arg His Ile Ser Asn Val Pro Gly Ile Gln Gly Ile Gly Thr
   305                 310                 315                 320
   Val Leu Gly Val Ala Ile Gln Gln Arg Leu Val Pro Gly Leu Lys Glu
                   325                 330                 335
   Phe Glu Glu Ala Tyr Val Gln Ala Asp Lys Gly Ala Pro Gly Pro Cys
               340                 345                 350
   Ser Arg Thr Ser Glu Cys Ser Ser Asn Gln Leu Cys Arg Glu Cys Arg
           355                 360                 365
   Ala Phe Thr Ala Glu Gln Met Pro Thr Leu Gly Ala Phe Ser Met Ser
       370                 375                 380
   Ser Ala Tyr Asn Ala Tyr Arg Ala Val Tyr Ala Val Ala His Gly Leu
   385                 390                 395                 400
   His Gln Leu Leu Gly Cys Ala Ser Gly Ala Cys Ser Arg Asp Arg Val
                   405                 410                 415
   Tyr Pro Trp Gln Leu Leu Glu Gln Ile Arg Lys Val Asn Phe Leu Leu
   420 425 430
   His Lys Asp Thr Val Arg Phe Asn Asp Asn Gly Asp Pro Leu Ser Gly
   435 440 445
   Tyr Asp Ile Ile Ala Trp Asp Trp Ser Gly Pro Lys Trp Asn Phe Arg
   450 455 460
   Val Ile Gly Ser Ser Met Trp Pro Pro Val Gln Leu Asp Ile Asn Lys
   465 470 475 480
   Thr Lys Ile Arg Trp His Gly Lys Asp Asn Gln Val Pro Lys Ser Val
   485 490 495
   Cys Ser Ser Asp Cys Leu Glu Gly His Gln Arg Val Ile Ser Gly Phe
   500 505 510
   Tyr His Cys Cys Phe Glu Cys Val Pro Cys Glu Ala Gly Ser Phe Leu
   515 520 525
   Asn Lys Ser Asp Leu His Ser Cys Gln Pro Cys Gly Lys Glu Glu Trp
   530 535 540
   Ala Pro Ala Gly Ser Glu Thr Cys Phe Pro Arg Thr Val Val Phe Leu
   545 550 555 560
   Thr Trp His Glu Thr Ile Ser Trp Val Leu Leu Ala Ala Asn Thr Leu
   565 570 575
   Leu Leu Leu Leu Val Thr Gly Thr Ala Gly Leu Phe Ala Trp His Leu
   580 585 590
   Asp Thr Pro Val Val Lys Ser Ala Gly Gly Arg Leu Cys Phe Phe Met
   595 600 605
   Leu Gly Ser Leu Ala Gly Gly Ser Cys Gly Leu Tyr Gly Phe Phe Gly
   610 615 620
   Glu Pro Thr Leu Pro Thr Cys Leu Leu Arg Gln Ser Leu Leu Ala Leu
   625 630 635 640
   Gly Phe Ala Ile Phe Leu Ser Cys Leu Thr Ile Arg Ser Phe Gln Leu
   645 650 655
   Val Phe Ile Phe Lys Phe Ser Ala Lys Val Pro Thr Phe Tyr Arg Ala
   660 665 670
   Trp Val Gln Asn His Gly Pro Gly Leu Phe Val Val Ile Ser Ser Met
           675                 680                 685
   Ala Gln Leu Leu Ile Cys Leu Thr Trp Leu Ala Val Trp Thr Pro Leu
       690                 695                 700
   Pro Thr Arg Glu Tyr Gln Arg Phe Pro Gln Leu Val Val Leu
   705                 710                 715

## Description

The present invention relates to the use of one or more nucleotides, one or more amino acids selected from the group consisting of glycine, asparagine, alanine, cysteine, histidine, leucine, methionine, phenylalanine, serine, tryptophan and tyrosine and one or more furanones for increasing the palatability of a foodstuff to a companion animal. The invention also relates to a pet foodstuff or supplement comprising one or more nucleotides, one or more amino acids selected from the group consisting of glycine, asparagine, alanine, cysteine, histidine, leucine, methionine, phenylalanine, serine, tryptophan and tyrosine and one or more furanones, and also to a method of increasing the palatability of a foodstuff to a companion animal.

It is well known that many feline and canine companion animals are fussy with their food. An animal will often refuse to eat a foodstuff that it has been accepting over some time, or refuse to eat any more than a minimal amount of a foodstuff. Part of this phenomenon can be driven by subtle changes in the sensory profile of the raw materials. These changes might not be perceived by the human consumer, but due to a difference in the olfactory and gustatory systems, feline and canine companion animals may well perceive these differences. These sensory differences can be due to natural variation of the raw materials used or when materials are in short supply and have to be substituted with alternatives.

This can be very frustrating for the owner and can result in the owner perceiving that the animal is unhappy and not enjoying its food. An animal may also fail to ingest its required amount of essential nutrients if not consuming an adequate amount of food available to it. Therefore, it can clearly be seen that there exists a need for a way to encourage companion animals to eat the foodstuff with which it is provided. Many solutions have been suggested to overcome this problem. Most commercially available pet foods are provided in a range of different flavours and/or textures. However, the companion animal owner will know that often a companion animal will suddenly, for no clear reason, refuse the flavour that the owner perceives to be its most preferred. Much research has been carried out on the flavour preferences of companion animals, by offering them a choice of different foodstuffs. The present inventors have taken this research further by studying the key taste receptor in cat, the umami receptor, (umami flavour is also referred to as savoury or meat flavour) and identifying the associated taste mechanisms. They have looked at a range of compounds, volatile and non-volatile, that are found in naturally occurring foodstuffs and established the interactions of these compounds and therefore developed a combination for optimal taste. Of particular interest and importance has been a focus on compounds that interact with and are perceived via the umami receptor.

Surprisingly, the inventors have found that companion animals show a strong and consistent preference for certain combinations of compounds, whether presented to the animals in water, a gel or in a model foodstuff. The present invention therefore relates to a use of a combination of compounds that is highly desirable to a companion animal for increasing palatability of a foodstuff to a companion animal. The companion animal is preferably a mammalian companion animal.

When a companion animal eats its recommended amount of (main meal) foodstuff each day, the animal will receive its required level of vitamins and minerals, and thus is highly likely to remain healthy and happy. Furthermore, the owner is satisfied that the animal is eating well. The inventors have identified certain volatile and non-volatile compounds that are present in natural products that particularly appeal to companion animals in combination. Non-volatile compounds relate to taste, (i.e. they are detected on the tongue); volatile compounds relate to aroma, and are compounds that affect the smell of the food, (i.e. compounds detected in the nose); and some compounds fall within both categories. The combination of both taste and aroma give the food its flavour. Flavour, as used herein, therefore encompasses both the taste and aroma of a foodstuff.

The invention, therefore, provides as a first aspect the use of one or more nucleotides, one or more amino acids selected from the group consisting of glycine, asparagine, alanine, cysteine, histidine, leucine, methionine, phenylalanine, serine, tryptophan and tyrosine and one or more furanones for increasing the palatability of a foodstuff to a companion animal and, therefore, for use in ensuring an adequate intake of food stuff by a companion animal. The amino acid may be selected from the group consisting of histidine, alanine and glycine.

The nucleotide may be selected from the group consisting of adenosine monophosphate (AMP), guanosine monophosphate (GMP), inosine monophosphate (IMP), uridine monophosphate (UMP), cytidine monophosphate (CMP), xanthosine monophosphate (XMP) or a mixture of two or more thereof. The nucleotide may be AMP, GMP, or IMP or a mixture thereof. The nucleotide may be GMP alone, or IMP alone, or a mixture of IMP and GMP. The nucleotide may be a mixture of GMP and IMP from about 1% to about 99% of GMP and of from about 1% to about 99% of IMP, more preferably, of from about 20% to about 80% of GMP and of from about 20% to about 80% of IMP or a mixture of about 50% GMP and about 50% IMP.

The amino acid is selected from the group consisting of glycine, asparagine, alanine, cysteine, histidine, leucine, methionine, phenylalanine, serine, tryptophan and tyrosine or a mixture of 2, 3, 4, 5, 6, 7, 8, 9, 10 or 11 thereof. Suitably, the amino acid may be selected from the group consisting of histidine, glycine and alanine. The amino acid is preferably in the L-amino acid form.

The furanone is suitably as set out in formula I or formula II, below, optionally substituted by hydroxyl, C₁₋₆ alkyl, C₁₋₆ alkoxy. 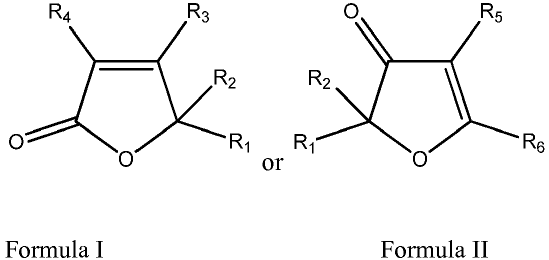
Each R₁ and R₂ are independently selected from hydrogen or C₁₋₆ alkyl, preferably hydrogen, methyl or ethyl;
R₃ is hydrogen, hydroxyl or C₁₋₆ alkyl, preferably methyl;
R₄ is hydrogen, hydroxyl or C₁₋₆ alkyl, preferably hydroxyl;
R₅ is hydrogen, hydroxyl, C₁₋₆ alkyl, C₁₋₆ alkoxy, 5 or 6 membered saturated heterocycle or -OC(O)R₇, preferably hydroxyl, -OCH₃, -OCH₂CH₃, -OC(O)CH₃, methyl or pyrrolidine;
R₆ is hydrogen or C₁₋₆ alkyl, preferably hydrogen or methyl;
R₇ is C₁₋₆ alkyl, preferably methyl.

The furanone may be selected from the group consisting of the furanones set out in Table 1, or a mixture of 2, 3, 4, 5, 6, 7, 8, 9, 10, 11 or 12 thereof. Suitably, the furanone is furaneol, homofuraneol, sotolon, norfuraneol, abhexon, mesifuranone, dimethoxyfuranone, or norfuraneol, as defined in Table 1. Alternatively, the furanone may be selected from the group consisting of furaneol, sotolon and abhexon, as defined herein in Table 1.

**Table 1**

| Key Furanones | Additional Furanones |
|---|---|
| 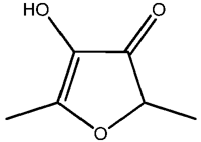 | 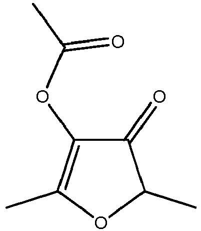 |
| Furaneol | Acetoxydimethylfuranone |
| 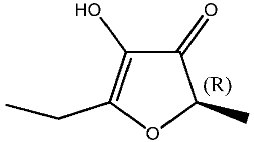 | 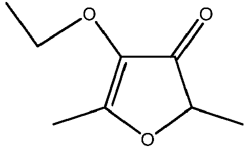 |
| (2R)-(+)-Homofuraneol I | Dimethylethoxyfuranone |
| 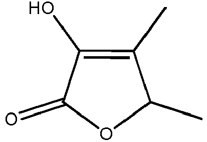 | 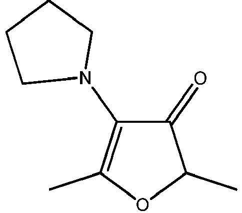 |
| Sotolon | DMPF |
| 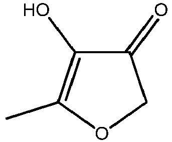 | 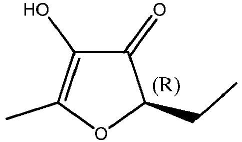 |
| Norfuraneol | (2R)-(+)-Homofuraneol II |
| 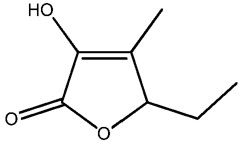 | 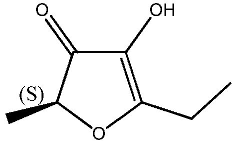 |
| Abhexon | (2S)-(-)-Homofuraneol I |
| 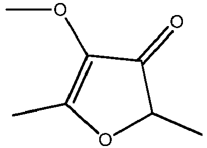 | 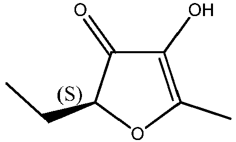 |
| Dimethylmethoxyfuranone (Mesifuranone) | (2S)-(-)-Homofuraneol II |

Optionally, the invention may also include the use of a pyrophosphate, such as tetra potassium pyrophosphate or a disodium pyrophosphate. Polyphosphates may be included in the composition also, such as sodium tripolyphosphate. The pyrophosphates and/or polyphosphates may be present in the composition at a concentration of 1mM or above. Suitably, the concentration of pyrophosphate and/or polyphosphate may be 5mM, 10mM, 15mM, 20mM, 25mM, 30mM, 40mM, 50mM, 100mM or 500mM.

The one or more amino acids selected from the group consisting of glycine, asparagine, alanine, cysteine, histidine, leucine, methionine, phenylalanine, serine, tryptophan and tyrosine may be present (individually or as a combination) in an amount of less than 1M, 1mM to 1M, 250mM to 1M, 5mM to 500mM, 10mM to 100mM, 10mM to 50mM or 20mM to 50mM. The amount of amino acid may be less than 200mM, less than 100mM, less than 20mM or less than 10mM. The amino acid(s) may be present in an amount of 25mM.

The one or more nucleotides may be present (individually or as a combination) in an amount of less than 100mM, 0.1mM to 100mM, 0.5mM to 50mM, 1mM to 20mM or 5mM to 10mM. The nucleotide may be present in an amount of greater than 1mM or greater than 2.5mM. The nucleotide may be present in an amount of less than 50mM, less than 20mM or less than 10mM. Most preferably, the one or more nucleotides may be present in an amount of 1mM to 100mM, such as 5mM, or 2mM. The nucleotide(s) may be present in an amount of 5mM.

The one or more furanones may be present (individually or as a combination) at a concentration of greater than 0.005ppm, 0.001ppm to 40ppm, 0.005ppm to 20ppm, 0.001ppm to 5ppm, 1ppm to 10ppm or 2ppm to 5ppm. The furanone(s) may be present in an amount less than 40ppm. The furanone(s) may be present in an amount of 4ppm.

The one or more nucleotides, the one or more amino acids and the one or more furanones for use in the invention are in addition to those found naturally in meat, vegetable or dairy products that may form part of a food stuff. The nucleotide(s) amino acid(s) and furanone(s) may be added to a pet food during or after manufacture. The nucleotide(s), amino acid(s) and furanone(s) are added in order to enhance or optimise the flavour profile of the basic meat (or other macronutrient) ingredients of the pet food.

The companion animal is preferably a feline animal (cat), or a canine animal (dog) although it may also be a guinea pig, a rabbit, bird or a horse.

The invention also provides as a second aspect a pet foodstuff comprising one or more nucleotides, one or more amino acids selected from the group consisting of glycine, asparagine, alanine, cysteine, histidine, leucine, methionine, phenylalanine, serine, tryptophan and tyrosine, and one or more furanones. The foodstuff may be packaged, wherein the packaging carries written or graphic information indicating that the pet foodstuff is meant to be consumed by a cat or a dog, or a guinea pig, a rabbit, a bird or a horse. The suitable and preferred features of the first aspect also apply to the second aspect, *mutatis mutandis.*

The combination of nucleotide, amino acid and furanone may be any set out in Table 2. The mixture of GMP to IMP may be of from 1 to 99:99 to 1, preferably from 20 to 80:80 to 20, or about 50:50 in all combinations including GMP and IMP in Table 2, provided of course that the total amount of the combination is 100%. The preferred levels of alanine, histidine and/or glycine and GMP, IMP, GMP/IMP and AMP are as stated above.

**Table 2**

| Nucleotides | Amino Acids | Furanones |
|---|---|---|
| GMP from about 1% to about 99% and IMP from about 1% to about 99% | Alanine | Furaneol |
| IMP | Alanine | Furaneol |
| GMP | Alanine | Furaneol |
| AMP | Alanine | Furaneol |
| GMP from about 1% to about 99% and IMP from about 1% to about 99% | Alanine | Norfuraneol |
| IMP | Alanine | Norfuraneol |
| GMP | Alanine | Norfuraneol |
| AMP | Alanine | Norfuraneol |
| GMP from about 1% to about 99% and IMP from about 1% to about 99% | Alanine | Homofuraneol |
| IMP | Alanine | Homofuraneol |
| GMP | Alanine | Homofuraneol |
| AMP | Alanine | Homofuraneol |
| GMP from about 1% to about 99% and IMP from about 1% to about 99% | Alanine | Abhexon |
| IMP | Alanine | Abhexon |
| GMP | Alanine | Abhexon |
| AMP | Alanine | Abhexon |
| GMP from about 1% to about 99% and IMP from about 1% to about 99% | Alanine | Mesifuranone |
| IMP | Alanine | Mesifuranone |
| GMP | Alanine | Mesifuranone |
| AMP | Alanine | Mesifuranone |
| GMP from about 1% to about 99% and IMP from about 1% to about 99% | Alanine | Sotolon |
| IMP | Alanine | Sotolon |
| GMP | Alanine | Sotolon |
| AMP | Alanine | Sotolon |
| GMP from about 1% to about 99% and IMP from about 1% to about 99% | Asparagine | Furaneol |
| IMP | Asparagine | Furaneol |
| GMP | Asparagine | Furaneol |
| AMP | Asparagine | Furaneol |
| GMP from about 1% to about 99% and IMP from about 1% to about 99% | Asparagine | Norfuraneol |
| IMP | Asparagine | Norfuraneol |
| GMP | Asparagine | Norfuraneol |
| AMP | Asparagine | Norfuraneol |
| GMP from about 1% to about 99% and IMP from about 1% to about 99% | Asparagine | Homofuraneol |
| IMP | Asparagine | Homofuraneol |
| GMP | Asparagine | Homofuraneol |
| AMP | Asparagine | Homofuraneol |
| GMP from about 1% to about 99% and IMP from about 1% to about 99% | Asparagine | Abhexon |
| IMP | Asparagine | Abhexon |
| GMP | Asparagine | Abhexon |
| AMP | Asparagine | Abhexon |
| GMP from about 1% to about 99% and IMP from about 1% to about 99% | Asparagine | Mesifuranone |
| IMP | Asparagine | Mesifuranone |
| GMP | Asparagine | Mesifuranone |
| AMP | Asparagine | Mesifuranone |
| GMP from about 1% to about 99% and IMP from about 1% to about 99% | Asparagine | Sotolon |
| IMP | Asparagine | Sotolon |
| GMP | Asparagine | Sotolon |
| AMP | Asparagine | Sotolon |
| GMP from about 1% to about 99% and IMP from about 1% to about 99% | Cysteine | Furaneol |
| IMP | Cysteine | Furaneol |
| GMP | Cysteine | Furaneol |
| AMP | Cysteine | Furaneol |
| GMP from about 1% to about 99% and IMP from about 1% to about 99% | Cysteine | Norfuraneol |
| IMP | Cysteine | Norfuraneol |
| GMP | Cysteine | Norfuraneol |
| AMP | Cysteine | Norfuraneol |
| GMP from about 1% to about 99% and IMP from about 1% to about 99% | Cysteine | Homofuraneol |
| IMP | Cysteine | Homofuraneol |
| GMP | Cysteine | Homofuraneol |
| AMP | Cysteine | Homofuraneol |
| GMP from about 1% to about 99% and IMP from about 1% to about 99% | Cysteine | Abhexon |
| IMP | Cysteine | Abhexon |
| GMP | Cysteine | Abhexon |
| AMP | Cysteine | Abhexon |
| GMP from about 1% to about 99% and IMP from about 1% to about 99% | Cysteine | Mesifuranone |
| IMP | Cysteine | Mesifuranone |
| GMP | Cysteine | Mesifuranone |
| AMP | Cysteine | Mesifuranone |
| GMP from about 1% to about 99% and IMP from about 1% to about 99% | Cysteine | Sotolon |
| IMP | Cysteine | Sotolon |
| GMP | Cysteine | Sotolon |
| AMP | Cysteine | Sotolon |
| GMP from about 1% to about 99% and IMP from about 1% to about 99% | Glycine | Furaneol |
| IMP | Glycine | Furaneol |
| GMP | Glycine | Furaneol |
| AMP | Glycine | Furaneol |
| GMP from about 1% to about 99% and IMP from about 1% to about 99% | Glycine | Norfuraneol |
| IMP | Glycine | Norfuraneol |
| GMP | Glycine | Norfuraneol |
| AMP | Glycine | Norfuraneol |
| GMP from about 1% to about 99% and IMP from about 1% to about 99% | Glycine | Homofuraneol |
| IMP | Glycine | Homofuraneol |
| GMP | Glycine | Homofuraneol |
| AMP | Glycine | Homofuraneol |
| GMP from about 1% to about 99% and IMP from about 1% to about 99% | Glycine | Abhexon |
| IMP | Glycine | Abhexon |
| GMP | Glycine | Abhexon |
| AMP | Glycine | Abhexon |
| GMP from about 1% to about 99% and IMP from about 1% to about 99% | Glycine | Mesifuranone |
| IMP | Glycine | Mesifuranone |
| GMP | Glycine | Mesifuranone |
| AMP | Glycine | Mesifuranone |
| GMP from about 1% to about 99% and IMP from about 1% to about 99% | Glycine | Sotolon |
| IMP | Glycine | Sotolon |
| GMP | Glycine | Sotolon |
| AMP | Glycine | Sotolon |
| GMP from about 1% to about 99% and IMP from about 1% to about 99% | Histidine | Furaneol |
| IMP | Histidine | Furaneol |
| GMP | Histidine | Furaneol |
| AMP | Histidine | Furaneol |
| GMP from about 1% to about 99% and IMP from about 1% to about 99% | Histidine | Norfuraneol |
| IMP | Histidine | Norfuraneol |
| GMP | Histidine | Norfuraneol |
| AMP | Histidine | Norfuraneol |
| GMP from about 1% to about 100% and IMP from about 1% to about 99% | Histidine | Homofuraneol |
| IMP | Histidine | Homofuraneol |
| GMP | Histidine | Homofuraneol |
| AMP | Histidine | Homofuraneol |
| GMP from about 1% to about 99% and IMP from about 1% to about 99% | Histidine | Abhexon |
| IMP | Histidine | Abhexon |
| GMP | Histidine | Abhexon |
| AMP | Histidine | Abhexon |
| GMP from about 1% to about 99% and IMP from about 1% to about 99% | Histidine | Mesifuranone |
| IMP | Histidine | Mesifuranone |
| GMP | Histidine | Mesifuranone |
| AMP | Histidine | Mesifuranone |
| GMP from about 1% to about 99% and IMP from about 1% to about 99% | Histidine | Sotolon |
| IMP | Histidine | Sotolon |
| GMP | Histidine | Sotolon |
| AMP | Histidine | Sotolon |
| GMP from about 1% to about 99% and IMP from about 1% to about 99% | Leucine | Furaneol |
| IMP | Leucine | Furaneol |
| GMP | Leucine | Furaneol |
| AMP | Leucine | Furaneol |
| GMP from about 1% to about 99% and IMP from about 1% to about 99% | Leucine | Norfuraneol |
| IMP | Leucine | Norfuraneol |
| GMP | Leucine | Norfuraneol |
| AMP | Leucine | Norfuraneol |
| GMP from about 1% to about 99% and IMP from about 1% to about 99% | Leucine | Homofuraneol |
| IMP | Leucine | Homofuraneol |
| GMP | Leucine | Homofuraneol |
| AMP | Leucine | Homofuraneol |
| GMP from about 1% to about 99% and IMP from about 1% to about 99% | Leucine | Abhexon |
| IMP | Leucine | Abhexon |
| GMP | Leucine | Abhexon |
| AMP | Leucine | Abhexon |
| GMP from about 1% to about 99% and IMP from about 1% to about 99% | Leucine | Mesifuranone |
| IMP | Leucine | Mesifuranone |
| GMP | Leucine | Mesifuranone |
| AMP | Leucine | Mesifuranone |
| GMP from about 1% to about 99% and IMP from about 1% to about 99% | Leucine | Sotolon |
| IMP | Leucine | Sotolon |
| GMP | Leucine | Sotolon |
| AMP | Leucine | Sotolon |
| GMP from about 1% to about 99% and IMP from about 1% to about 99% | Methionine | Furaneol |
| IMP | Methionine | Furaneol |
| GMP | Methionine | Furaneol |
| AMP | Methionine | Furaneol |
| GMP from about 1% to about 99% and IMP from about 1% to about 99% | Methionine | Norfuraneol |
| IMP | Methionine | Norfuraneol |
| GMP | Methionine | Norfuraneol |
| AMP | Methionine | Norfuraneol |
| GMP from about 1% to about 99% and IMP from about 1% to about 99% | Methionine | Homofuraneol |
| IMP | Methionine | Homofuraneol |
| GMP | Methionine | Homofuraneol |
| AMP | Methionine | Homofuraneol |
| GMP from about 1% to about 99% and IMP from about 1% to about 99% | Methionine | Abhexon |
| IMP | Methionine | Abhexon |
| GMP | Methionine | Abhexon |
| AMP | Methionine | Abhexon |
| GMP from about 1% to about 99% and IMP from about 1% to about 99% | Methionine | Mesifuranone |
| IMP | Methionine | Mesifuranone |
| GMP | Methionine | Mesifuranone |
| AMP | Methionine | Mesifuranone |
| GMP from about 1% to about 99% and IMP from about 1% to about 99% | Methionine | Sotolon |
| IMP | Methionine | Sotolon |
| GMP | Methionine | Sotolon |
| AMP | Methionine | Sotolon |
| GMP from about 1% to about 99% and IMP from about 1% to about 99% | Phenylalanine | Furaneol |
| IMP | Phenylalanine | Furaneol |
| GMP | Phenylalanine | Furaneol |
| AMP | Phenylalanine | Furaneol |
| GMP from about 1% to about 99% and IMP from about 1% to about 99% | Phenylalanine | Norfuraneol |
| IMP | Phenylalanine | Norfuraneol |
| GMP | Phenylalanine | Norfuraneol |
| AMP | Phenylalanine | Norfuraneol |
| GMP from about 1% to about 99% and IMP from about 1% to about 99% | Phenylalanine | Homofuraneol |
| IMP | Phenylalanine | Homofuraneol |
| GMP | Phenylalanine | Homofuraneol |
| AMP | Phenylalanine | Homofuraneol |
| GMP from about 1% to about 99% and IMP from about 1% to about 99% | Phenylalanine | Abhexon |
| IMP | Phenylalanine | Abhexon |
| GMP | Phenylalanine | Abhexon |
| AMP | Phenylalanine | Abhexon |
| GMP from about 1% to about 99% and IMP from about 1% to about 99% | Phenylalanine | Mesifuranone |
| IMP | Phenylalanine | Mesifuranone |
| GMP | Phenylalanine | Mesifuranone |
| AMP | Phenylalanine | Mesifuranone |
| GMP from about 1% to about 99% and IMP from about 1% to about 99% | Phenylalanine | Sotolon |
| IMP | Phenylalanine | Sotolon |
| GMP | Phenylalanine | Sotolon |
| AMP | Phenylalanine | Sotolon |
| GMP from about 1% to about 99% and IMP from | Serine | Furaneol |
| about 1% to about 99% | | |
| IMP | Serine | Furaneol |
| GMP | Serine | Furaneol |
| AMP | Serine | Furaneol |
| GMP from about 1% to about 99% and IMP from about 1% to about 99% | Serine | Norfuraneol |
| IMP | Serine | Norfuraneol |
| GMP | Serine | Norfuraneol |
| AMP | Serine | Norfuraneol |
| GMP from about 1% to about 99% and IMP from about 1% to about 99% | Serine | Homofuraneol |
| IMP | Serine | Homofuraneol |
| GMP | Serine | Homofuraneol |
| AMP | Serine | Homofuraneol |
| GMP from about 1% to about 99% and IMP from about 1% to about 99% | Serine | Abhexon |
| IMP | Serine | Abhexon |
| GMP | Serine | Abhexon |
| AMP | Serine | Abhexon |
| GMP from about 1% to about 99% and IMP from about 1% to about 99% | Serine | Mesifuranone |
| IMP | Serine | Mesifuranone |
| GMP | Serine | Mesifuranone |
| AMP | Serine | Mesifuranone |
| GMP from about 1% to about 99% and IMP from about 1% to about 99% | Serine | Sotolon |
| IMP | Serine | Sotolon |
| GMP | Serine | Sotolon |
| AMP | Serine | Sotolon |
| GMP from about 1% to about 99% and IMP from about 1% to about 99% | Tryptophan | Furaneol |
| IMP | Tryptophan | Furaneol |
| GMP | Tryptophan | Furaneol |
| AMP | Tryptophan | Furaneol |
| GMP from about 1% to about 99% and IMP from about 1% to about 99% | Tryptophan | Norfuraneol |
| IMP | Tryptophan | Norfuraneol |
| GMP | Tryptophan | Norfuraneol |
| AMP | Tryptophan | Norfuraneol |
| GMP from about 1% to about 99% and IMP from about 1% to about 99% | Tryptophan | Homofuraneol |
| IMP | Tryptophan | Homofuraneol |
| GMP | Tryptophan | Homofuraneol |
| AMP | Tryptophan | Homofuraneol |
| GMP from about 1% to about 99% and IMP from about 1% to about 99% | Tryptophan | Abhexon |
| IMP | Tryptophan | Abhexon |
| GMP | Tryptophan | Abhexon |
| AMP | Tryptophan | Abhexon |
| GMP from about 1% to about 99% and IMP from about 1% to about 99% | Tryptophan | Mesifuranone |
| IMP | Tryptophan | Mesifuranone |
| GMP | Tryptophan | Mesifuranone |
| AMP | Tryptophan | Mesifuranone |
| GMP from about 1% to about 99% and IMP from about 1% to about 99% | Tryptophan | Sotolon |
| IMP | Tryptophan | Sotolon |
| GMP | Tryptophan | Sotolon |
| AMP | Tryptophan | Sotolon |
| GMP from about 1% to about 100% and IMP from about 1% to 100% | Tyrosine | Furaneol |
| IMP | Tyrosine | Furaneol |
| GMP | Tyrosine | Furaneol |
| AMP | Tyrosine | Furaneol |
| GMP from about 1% to about 99% and IMP from about 1% to about 99% | Tyrosine | Norfuraneol |
| IMP | Tyrosine | Norfuraneol |
| GMP | Tyrosine | Norfuraneol |
| AMP | Tyrosine | Norfuraneol |
| GMP from about 1% to about 99% and IMP from about 1% to about 99% | Tyrosine | Homofuraneol |
| IMP | Tyrosine | Homofuraneol |
| GMP | Tyrosine | Homofuraneol |
| AMP | Tyrosine | Homofuraneol |
| GMP from about 1% to about 99% and IMP from about 1% to about 99% | Tyrosine | Abhexon |
| IMP | Tyrosine | Abhexon |
| GMP | Tyrosine | Abhexon |
| AMP | Tyrosine | Abhexon |
| GMP from about 1% to about 99% and IMP from about 1% to about 99% | Tyrosine | Mesifuranone |
| IMP | Tyrosine | Mesifuranone |
| GMP | Tyrosine | Mesifuranone |
| AMP | Tyrosine | Mesifuranone |
| GMP from about 1% to about 99% and IMP from about 1% to about 99% | Tyrosine | Sotolon |
| IMP | Tyrosine | Sotolon |
| GMP | Tyrosine | Sotolon |
| AMP | Tyrosine | Sotolon |
| UMP | Alanine | Furaneol |
| XMP | Alanine | Furaneol |
| CMP | Alanine | Furaneol |
| UMP | Alanine | Norfuraneol |
| XMP | Alanine | Norfuraneol |
| CMP | Alanine | Norfuraneol |
| UMP | Alanine | Homofuraneol |
| XMP | Alanine | Homofuraneol |
| CMP | Alanine | Homofuraneol |
| UMP | Alanine | Abhexon |
| XMP | Alanine | Abhexon |
| CMP | Alanine | Abhexon |
| UMP | Alanine | Mesifuranone |
| XMP | Alanine | Mesifuranone |
| CMP | Alanine | Mesifuranone |
| UMP | Alanine | Sotolon |
| XMP | Alanine | Sotolon |
| CMP | Alanine | Sotolon |
| UMP | Asparagine | Furaneol |
| XMP | Asparagine | Furaneol |
| CMP | Asparagine | Furaneol |
| UMP | Asparagine | Norfuraneol |
| XMP | Asparagine | Norfuraneol |
| CMP | Asparagine | Norfuraneol |
| UMP | Asparagine | Homofuraneol |
| XMP | Asparagine | Homofuraneol |
| CMP | Asparagine | Homofuraneol |
| UMP | Asparagine | Abhexon |
| XMP | Asparagine | Abhexon |
| CMP | Asparagine | Abhexon |
| UMP | Asparagine | Mesifuranone |
| XMP | Asparagine | Mesifuranone |
| CMP | Asparagine | Mesifuranone |
| UMP | Asparagine | Sotolon |
| XMP | Asparagine | Sotolon |
| CMP | Asparagine | Sotolon |
| UMP | Cysteine | Furaneol |
| XMP | Cysteine | Furaneol |
| CMP | Cysteine | Furaneol |
| UMP | Cysteine | Norfuraneol |
| XMP | Cysteine | Norfuraneol |
| CMP | Cysteine | Norfuraneol |
| UMP | Cysteine | Homofuraneol |
| XMP | Cysteine | Homofuraneol |
| CMP | Cysteine | Homofuraneol |
| UMP | Cysteine | Abhexon |
| XMP | Cysteine | Abhexon |
| CMP | Cysteine | Abhexon |
| UMP | Cysteine | Mesifuranone |
| XMP | Cysteine | Mesifuranone |
| CMP | Cysteine | Mesifuranone |
| UMP | Cysteine | Sotolon |
| XMP | Cysteine | Sotolon |
| CMP | Cysteine | Sotolon |
| UMP | Glycine | Furaneol |
| XMP | Glycine | Furaneol |
| CMP | Glycine | Furaneol |
| UMP | Glycine | Norfuraneol |
| XMP | Glycine | Norfuraneol |
| CMP | Glycine | Norfuraneol |
| UMP | Glycine | Homofuraneol |
| XMP | Glycine | Homofuraneol |
| CMP | Glycine | Homofuraneol |
| UMP | Glycine | Abhexon |
| XMP | Glycine | Abhexon |
| CMP | Glycine | Abhexon |
| UMP | Glycine | Mesifuranone |
| XMP | Glycine | Mesifuranone |
| CMP | Glycine | Mesifuranone |
| UMP | Glycine | Sotolon |
| XMP | Glycine | Sotolon |
| CMP | Glycine | Sotolon |
| UMP | Histidine | Furaneol |
| XMP | Histidine | Furaneol |
| CMP | Histidine | Furaneol |
| UMP | Histidine | Norfuraneol |
| XMP | Histidine | Norfuraneol |
| CMP | Histidine | Norfuraneol |
| UMP | Histidine | Homofuraneol |
| XMP | Histidine | Homofuraneol |
| CMP | Histidine | Homofuraneol |
| UMP | Histidine | Abhexon |
| XMP | Histidine | Abhexon |
| CMP | Histidine | Abhexon |
| UMP | Histidine | Mesifuranone |
| XMP | Histidine | Mesifuranone |
| CMP | Histidine | Mesifuranone |
| UMP | Histidine | Sotolon |
| XMP | Histidine | Sotolon |
| CMP | Histidine | Sotolon |
| UMP | Leucine | Furaneol |
| XMP | Leucine | Furaneol |
| CMP | Leucine | Furaneol |
| UMP | Leucine | Norfuraneol |
| XMP | Leucine | Norfuraneol |
| CMP | Leucine | Norfuraneol |
| UMP | Leucine | Homofuraneol |
| XMP | Leucine | Homofuraneol |
| CMP | Leucine | Homofuraneol |
| UMP | Leucine | Abhexon |
| XMP | Leucine | Abhexon |
| CMP | Leucine | Abhexon |
| UMP | Leucine | Mesifuranone |
| XMP | Leucine | Mesifuranone |
| CMP | Leucine | Mesifuranone |
| UMP | Leucine | Sotolon |
| XMP | Leucine | Sotolon |
| CMP | Leucine | Sotolon |
| UMP | Methionine | Furaneol |
| XMP | Methionine | Furaneol |
| CMP | Methionine | Furaneol |
| UMP | Methionine | Norfuraneol |
| XMP | Methionine | Norfuraneol |
| CMP | Methionine | Norfuraneol |
| UMP | Methionine | Homofuraneol |
| XMP | Methionine | Homofuraneol |
| CMP | Methionine | Homofuraneol |
| UMP | Methionine | Abhexon |
| XMP | Methionine | Abhexon |
| CMP | Methionine | Abhexon |
| UMP | Methionine | Mesifuranone |
| XMP | Methionine | Mesifuranone |
| CMP | Methionine | Mesifuranone |
| UMP | Methionine | Sotolon |
| XMP | Methionine | Sotolon |
| CMP | Methionine | Sotolon |
| UMP | Phenylalanine | Furaneol |
| XMP | Phenylalanine | Furaneol |
| CMP | Phenylalanine | Furaneol |
| UMP | Phenylalanine | Norfuraneol |
| XMP | Phenylalanine | Norfuraneol |
| CMP | Phenylalanine | Norfuraneol |
| UMP | Phenylalanine | Homofuraneol |
| XMP | Phenylalanine | Homofuraneol |
| CMP | Phenylalanine | Homofuraneol |
| UMP | Phenylalanine | Abhexon |
| XMP | Phenylalanine | Abhexon |
| CMP | Phenylalanine | Abhexon |
| UMP | Phenylalanine | Mesifuranone |
| XMP | Phenylalanine | Mesifuranone |
| CMP | Phenylalanine | Mesifuranone |
| UMP | Phenylalanine | Sotolon |
| XMP | Phenylalanine | Sotolon |
| CMP | Phenylalanine | Sotolon |
| UMP | Serine | Furaneol |
| XMP | Serine | Furaneol |
| CMP | Serine | Furaneol |
| UMP | Serine | Norfuraneol |
| XMP | Serine | Norfuraneol |
| CMP | Serine | Norfuraneol |
| UMP | Serine | Homofuraneol |
| XMP | Serine | Homofuraneol |
| CMP | Serine | Homofuraneol |
| UMP | Serine | Abhexon |
| XMP | Serine | Abhexon |
| CMP | Serine | Abhexon |
| UMP | Serine | Mesifuranone |
| XMP | Serine | Mesifuranone |
| CMP | Serine | Mesifuranone |
| UMP | Serine | Sotolon |
| XMP | Serine | Sotolon |
| CMP | Serine | Sotolon |
| UMP | Tryptophan | Furaneol |
| XMP | Tryptophan | Furaneol |
| CMP | Tryptophan | Furaneol |
| UMP | Tryptophan | Norfuraneol |
| XMP | Tryptophan | Norfuraneol |
| CMP | Tryptophan | Norfuraneol |
| UMP | Tryptophan | Homofuraneol |
| XMP | Tryptophan | Homofuraneol |
| CMP | Tryptophan | Homofuraneol |
| UMP | Tryptophan | Abhexon |
| XMP | Tryptophan | Abhexon |
| CMP | Tryptophan | Abhexon |
| UMP | Tryptophan | Mesifuranone |
| XMP | Tryptophan | Mesifuranone |
| CMP | Tryptophan | Mesifuranone |
| UMP | Tryptophan | Sotolon |
| XMP | Tryptophan | Sotolon |
| CMP | Tryptophan | Sotolon |
| UMP | Tyrosine | Furaneol |
| XMP | Tyrosine | Furaneol |
| CMP | Tyrosine | Furaneol |
| UMP | Tyrosine | Norfuraneol |
| XMP | Tyrosine | Norfuraneol |
| CMP | Tyrosine | Norfuraneol |
| UMP | Tyrosine | Homofuraneol |
| XMP | Tyrosine | Homofuraneol |
| CMP | Tyrosine | Homofuraneol |
| UMP | Tyrosine | Abhexon |
| XMP | Tyrosine | Abhexon |
| CMP | Tyrosine | Abhexon |
| UMP | Tyrosine | Mesifuranone |
| XMP | Tyrosine | Mesifuranone |
| CMP | Tyrosine | Mesifuranone |
| UMP | Tyrosine | Sotolon |
| XMP | Tyrosine | Sotolon |
| CMP | Tyrosine | Sotolon |

It should be noted that taurine is not included as an amino acid in respect of the invention. In fact, taurine is an organic sulfonic acid and lacks the carboxyl group which is characteristic of amino acids i.e. there is no COOH group. However in the art, such as described in US 2006/0286276 and US 2006/286275, taurine is often described as an amino acid, which is incorrect. Since taurine does not contain a carboxyl group it is postulated that it does not fit in the same way into the binding site of the umami receptor as does an amino acid as defined by the invention.

The invention also relates to, as a third aspect, a method for increasing acceptance of a foodstuff in a companion animal comprising allowing the animal access to a foodstuff comprising one or more nucleotides, one or more amino acids selected from the group consisting of glycine, asparagine, alanine, cysteine, histidine, leucine, methionine, phenylalanine, serine, tryptophan and tyrosine and one or more furanones. Increasing the palatability leads to increased enjoyment and acceptance of the foodstuff to the animal. Increased acceptance and enjoyment helps to overcome the fussiness of a companion animal with regard to food. Since the animal accepts and enjoys the foodstuff in accordance with the invention, it is more likely to reach its required daily calorie and nutrient intake.

The composition may be for use in increasing the appetising appeal of a foodstuff to an animal in order to encourage an animal to eat a healthy amount of foodstuff. Thus, the use of a composition comprising one or more nucleotides, one or more amino acids selected from the group consisting of glycine, asparagine, alanine, cysteine, histidine, leucine, methionine, phenylalanine, serine, tryptophan and tyrosine and one or more furanones in increasing the appetising appeal of a foodstuff; in encouraging a healthy intake of a foodstuff; in ensuring the required intake of nutrients and calories in a companion animal, is included in the present invention. By healthy level it is meant an amount that enables the animal to maintain or achieve an intake contributing to its overall general health in terms of micronutrients, macronutrients and calories. By this it is meant that an animal may eat sufficient calories and receive a nutritionally complete diet without needing to eat excess calories and thus maintaining a healthy balance, such as set out in the "Mars Petcare Essential Nutrient Standards".

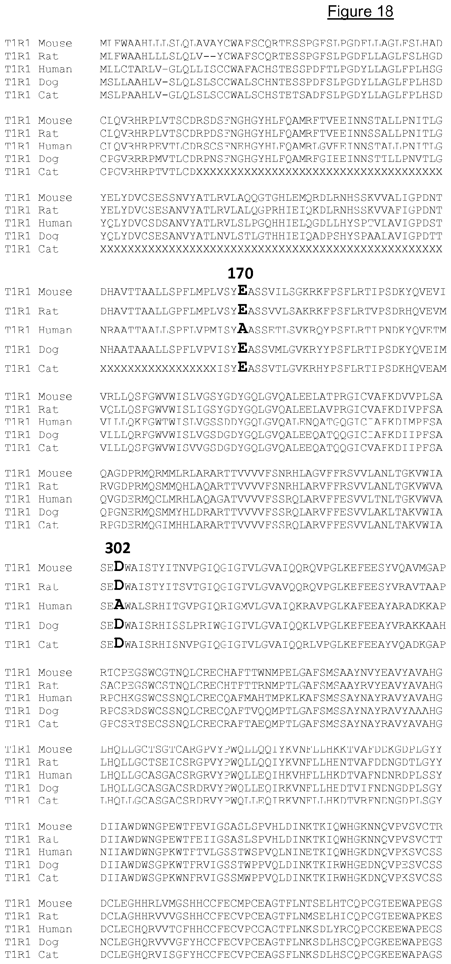

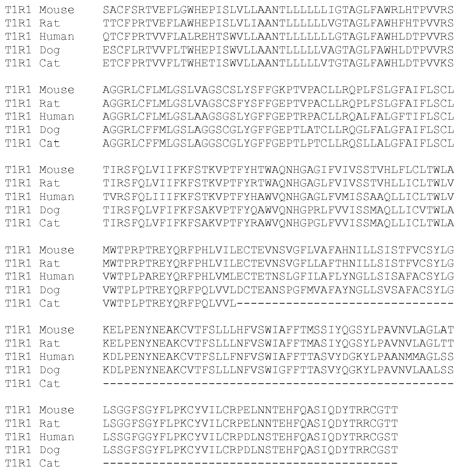

As mentioned above, the umami receptor has been studied as a target for flavour compounds. Many studies relating to the activation of the umami receptor focus on the human umami receptor. However, surprisingly the inventors have found that the umami receptor of humans differs in sequence to that of certain companion animals as shown in Figure 18. Moreover, even though certain companion animals have shown preferences according to the art to particular amino acids, these preferences differ from animal to animal. Therefore, it is not possible to predict from work carried out in humans whether a companion animal would have the same response to the same amino acids.

In the human umami receptor, the key active site residues involved in glutamate and IMP binding have been identified by *in silico* modelling and by site-directed mutagenesis. These studies show that the key residues are at positions H71, T149, S172, D192, Y220, E301 S306 and S385 and the residues are highly conserved in other species. A comparison of the human, pig, mouse and cat sequences showed only two changes in these particular residues (pig L220 and mouse A385).

The high level of conservation in these active site residues does not fit well with the different amino acid specificity for the umami receptor in the species studied. A study on pig umami receptors identified other residues in the active site that were reported as being important in binding. The amino acids in these locations were conserved between humans and pigs (R277, R307 and H308). On the basis of this similarity, pig umami was proposed as a model for human umami. However, the pig umami receptor showed a wide amino acid specificity (glutamate, alanine, asparagine, glutamine, serine and threonine) compared to the usual glutamate and aspartate ligands that are associated with human umami receptor activation. A report that used some other amino acids (glycine, alanine, serine) at high concentrations (up to 1M) suggested that these compounds delivered a umami sensation in humans but the effect was only monitored using sensory analysis and no receptor studies were reported. Thus it seems that the range of amino acids that activate the human umami receptor are very limited compared to other species and that the residues identified so far do not satisfactorily explain the difference in amino acid specificity between the pig and human umami receptors.

The invention also provides a method of enhancing the umami flavour/taste of a foodstuff, the method comprising adding to or including in the foodstuff one or more nucleotides, one or more amino acids consisting of glycine, asparagine, alanine, cysteine, histidine, leucine, methionine, phenylalanine, serine, tryptophan and tyrosine and one or more furanones.

By enhancing it is meant that the umami flavour is detected more strongly/more intensely by the animal. It is thought that the addition of an amino acid strengthens the binding of a nucleotide to the umami receptor or vice versa. The addition of a furanone synergistically increases the umami flavour potency.

The present invention also provides a method of increasing an animal's preference for a foodstuff, the method comprising the addition of a nucleotide, an amino acid selected from the group consisting of glycine, asparagine, alanine, cysteine, histidine, leucine, methionine, phenylalanine, serine, tryptophan and tyrosine and a furanone to the foodstuff.

Also provided is a method of enhancing the umami flavour of a foodstuff, the method comprising the addition of a nucleotide, an amino acid selected from the group consisting of glycine, asparagine, alanine, cysteine, histidine, leucine, methionine, phenylalanine, serine, tryptophan and tyrosine and a furanone to the foodstuff. A method of increasing the meaty (savoury) flavour of a foodstuff is also achieved by the use of a nucleotide, an amino acid selected from the group consisting of (glycine, asparagine, alanine, cysteine, histidine, leucine, methionine, phenylalanine, serine, tryptophan and tyrosine) and a furanone as described herein. The combination of the three components enables them to work in synergy to enhance umami flavour perception.

As a further aspect, the invention relates to a process for producing a pet foodstuff comprising one or more nucleotides, one or more amino acids selected from the group consisting of glycine, asparagine, alanine, cysteine, histidine, leucine, methionine, phenylalanine, serine, tryptophan and tyrosine and one or more furanones, the method comprising the steps of adding and mixing one or more nucleotides, one or more amino acids selected from the group consisting of glycine, asparagine, alanine, cysteine, histidine, leucine, methionine, phenylalanine, serine, tryptophan and tyrosine and one or more furanones with a pet foodstuff. The addition and/or mixing may be carried out prior to, during or after formulating, processing or packaging the foodstuff. The addition and/or mixing of the nucleotide, amino acid and furanone may be sequential or simultaneous.

All features of all aspects apply to all other aspects, *mutatis mutandis.*

The inventors have found that the addition of one or more nucleotides, one or more amino acids selected from the group consisting of glycine, asparagine, alanine, cysteine, histidine, leucine, methionine, phenylalanine, serine, tryptophan and tyrosine and one or more furanones to a pet food product significantly increases the preference of a companion animal for the foodstuff. The animals show a strong preference for a foodstuff or water comprising one or more nucleotides, one or more amino acids selected from the group consisting of glycine, asparagine, alanine, cysteine, histidine, leucine, methionine, phenylalanine, serine, tryptophan and tyrosine and one or more furanones over a foodstuff or water having none, or one or two of these compounds. This overcomes the difficulties associated with fussy animals and ensures an animal eats the entirety of the recommended daily amount of foodstuff provided to it, resulting in the health and wellbeing of the animal as well as the peace of mind of the owner.

The advantage, therefore, of a three component mixture for inclusion in a foodstuff is several-fold: an animal will be encouraged to eat the foodstuff on a consistent and long term basis; the synergistic effect means that a lower amount of each of the ingredients needs to be included in a foodstuff, meaning cost effective use of each of the nucleotide, amino acid and furanone.

Without wishing to be bound by theory, the present inventors believe that the umami taste receptor on the tongue of an animal can detect a nucleotide and an amino acid (importantly, selected from the group consisting of glycine, asparagine, alanine, cysteine, histidine, leucine, methionine, phenylalanine, serine, tryptophan and tyrosine) at different binding sites and thus, the effect of combining both a nucleotide and such an amino acid in the composition provides more than an additive effect of each component individually to the animal. This effect is further amplified by the addition of a furanone. The umami receptor is a heterodimeric transmembrane protein receptor and is also referred to in the art as T1R1/T1R3.

The present application shows that through *in silico* modelling of a non-human umami receptor and *in vitro* assays using a non-human umami receptor the inventors have found that the amino acids of the present invention, namely glycine, asparagine, alanine, cysteine, histidine, leucine, methionine, phenylalanine, serine, tryptophan and tyrosine are each able to bind to and activate the umami receptor to different extents.

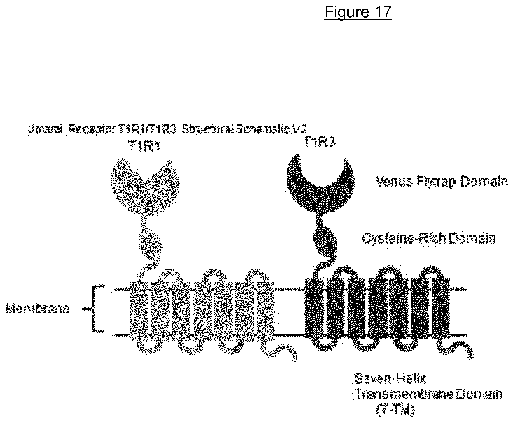

Further modelling of the cat umami receptor identified two other positions in the active site (170 and 302) that contained very different residues between human and other species and could potentially modify the access of amino acids to the binding site and also modify the binding behaviour of amino acids. It appears that the binding of one of the amino acids of the invention may change the conformation of the umami receptor allowing it more contact with a bound nucleotide. As can be seen in Figure 17, the receptor could be described in terms of a Venus Fly Trap, wherein the binding site consists of a structure similar to 'jaws', which close upon being bound by the compounds according to the invention. Once the amino acid has bound within the "jaws" of the receptor, the receptor may be more amenable to the binding of the nucleotide. It can be said that the amino acid potentially optimises the molecular environment for nucleotide binding. It is hypothesised that amino acid ligands have a primary binding site in the T1R1 active site but they also make interactions with other residues around the active site. The nature and extent of the interactions depends on the functional groups present in the amino acid side chain e.g. carboxyl, amino or hydrophobic groups. Thus changes in other residues in the active site are postulated as a possible reason for the different amino acid binding specificities observed between species. Furthermore, it is postulated that once the amino acid and nucleotide have bound, the furanone interacts synergistically to increase the umami flavour perception. This interaction may occur by cross talk between binding sites or during the transduction and neural processes.

The flytrap domain consists of two lobes, an upper lobe and a lower lobe that are connected by a region known as the hinge, (Figure 17). The flytrap transitions from an open confirmation to a closed conformation upon binding of an amino acid and/or nucleotide.

*In silico* modelling and *in vitro* testing by the inventors has shown that the amino acid binds near to the hinge region of the flytrap and the nucleotide binds at a region more distal to the hinge, but still remains between the lobes of the jaws. Thus, it appears that the amino acid first binds allowing the nucleotide to have a stronger connection with the receptor. Without the presence of the amino acid, the nucleotide seems to bind within the flytrap jaws but further away from the hinge region of the receptor. In the absence of the amino acid, the nucleotide does not appear to fit as tightly into the jaws/ binding site as when the amino acid (in accordance with the invention) is present.

Thus, the nucleotide and the amino acid (selected from those listed herein) appear to work together in a coordinated manner in order to assist each other in binding to the umami receptor and increasing the perception of both compounds by the animal on the taste receptor when they are delivered together in a composition. Again, without wishing to be bound by theory, it appears that the amino acid selected from the group consisting of glycine, asparagine, alanine, cysteine, histidine, leucine, methionine, phenylalanine, serine, tryptophan and tyrosine, and the nucleotide encourage each other in binding to the umami receptor. The umami flavour perception created from the nucleotide and amino acid binding is further increased by the presence of a furanone which acts in a synergistic manner.

The amino acids selected from the group consisting of glycine, asparagine, alanine, cysteine, histidine, leucine, methionine, phenylalanine, serine, tryptophan and tyrosine all have in common an uncharged side chain, and it should be noted that this list does not include cyclic amino acids, spyro amino acids or alpha disubstituted amino acids. Furthermore, the types of amino acids that interact in a complementary fashion with nucleotides in this way to increase the perception of such compounds by an animal, include aromatic, polar, lipohilic or small saturated ring amino acids.

As mentioned above, in addition to *in silico* modelling of the feline umami receptor, sequence alignments of the human, cat and dog receptors have been performed. Interestingly, the human sequence alignment shows that two amino acids at position 170 and 302 (numbered in relation to the human T1R1 receptor) are found as alanine residues in human, whereas these positions are glutamate and aspartate in the other species. Additionally, the feline umami receptor does not bind aspartate or glutamate, which are natural ligands for the human T1R1/T1R3 receptor. Therefore, due to these significant differences, it would not be expected by the skilled person that compounds that are known to bind to the human receptor would affect the umami receptor of other animals as described herein.

It is noted that Yoshi et al., (Synergistic Effects of 5'-Nucleotides on Rat Taste Responses to Various Amino Acids, Brain Research, 367 (1986) 45-51), conclude that a synergistic effect is seen between the amino acids and nucleotides. However, the experiments described were not carried out *in vivo,* but rather utilised *in vitro* nerve signalling. Notably, it was assumed that a nerve response was concluded to be a positive response. However, as it is well known in the art, a nerve response can also be a negative response for an animal i.e. *in vivo* a nerve response could be a negative taste perception. Further, it can be seen that the amino acids discovered to be most responsive are not those that correlate to the information provided by the present invention. This is almost certainly due to the 'artificial' environment in which the amino acids were tested by Yoshi *et al.*

US patent US3524747 describes the addition of a minimum of seven amino acids to a foodstuff to impart a "meaty" flavour. However, although a combination of seven amino acids could be contemplated by the present invention, the knowledge obtained by the inventors (that certain amino acids with a nucleotide and a furanone enhances palatability) enables fewer than seven amino acids to be utilised to increase the palatability of a foodstuff.

Combinations of nucleotides and amino acids in flavour compositions are furthermore described in US4267195, CN101513227, CN101401621, US2003/0232407 and JP2000253847. The use of one or more furanones as a palatability enhancer is described in WO2005/053421.

It is notable that none of the prior art known to the inventors contemplates the use of a nucleotide and amino acid, (particularly, an amino acid selected from the group consisting of glycine, asparagine, alanine, cysteine, histidine, leucine, methionine, phenylalanine, serine, tryptophan and tyrosine) together with a furanone for enhancing the flavour of a foodstuff for a companion animal. As mentioned, these particular amino acids are thought to enhance the nucleotide binding to umami receptor working in a synergistic way, whereas other amino acids do not appear to bind to the umami receptor.

The nucleotide, amino acid and furanone according to the present invention may be incorporated into any product which an animal, such as a dog or a cat, may consume in its diet. Thus, the invention covers standard food products, supplements, pet food, drinks, snacks and treats. The food product is preferably a cooked product. It may incorporate meat or animal derived material (such as beef, chicken, turkey, lamb, blood plasma, marrowbone etc. or two or more thereof). The food stuff alternatively may be meat free (preferably including a meat substitute such as soya, maize gluten or a soya product) in order to provide a protein source. The product may contain additional protein sources such as soya protein concentrate, milk proteins, gluten etc. The product may also contain a starch source, such as gelatinised starch, such as one or more grains (e.g. wheat, corn, rice, oats, barely etc) or may be starch free. A typical dry commercial cat and dog food contains about 10-70% crude protein, about 10-60% fat and the remainder being carbohydrate, including dietary fibre and ash. A typical wet, or moist product contains (on a dry matter basis) about 40% fat, 50% protein and the remainder being fibre and ash. The present invention is particularly relevant for a pet foodstuff as herein described which is sold as a diet, foodstuff or supplement for a cat or dog. In the present text the terms "domestic" dog and "domestic" cat mean dogs and cats, in particular *Felis domesticus* and *Canis domesticus.* Preferably, the pet foodstuff will meet the macronutrient requirements of an animal preferably a ratio of protein: fat: carbohydrate of approximately 50:40:10 for feline animals and 30:60:10 for a canine animal.

As can be seen from the examples, below, it has been surprisingly found that an amino acid selected from the group consisting of glycine, asparagine, alanine, cysteine, histidine, leucine, methionine, phenylalanine, serine, tryptophan and tyrosine, a nucleotide and a furanone of the invention provide a greater than additive effect when presented to an animal. In other words, the preference of a companion animal for the combination of a nucleotide, an amino acid selected from the group consisting of glycine, asparagine, alanine, cysteine, histidine, leucine, methionine, phenylalanine, serine, tryptophan and tyrosine and a furanone is greater than an additive effect of the preference for any or each of the individual compounds. The addition of a furanone increases this preference to a greater extent. That is, inclusion of a furanone increases preference by more than the additive effect of the preference for the furanone alone.

Thus, the unexpected benefit of the combination of one or more nucleotides, one or more amino acids and one or more furanones is increased palatability. Without wishing to be bound by theory, the present inventors believe that this is due to the conformation and positioning of the binding sites of the umami receptor for a nucleotide, amino acid and the enhancing effect of furanone, as described above.

The invention will now be described in reference to the following Figures and Examples in which:
Figure 1 shows the results of a difference test of a composition comprising 25mM histidine + 2.5mM IMP with a composition comprising 25mM histidine;
Figure 2 shows the results of a difference test of a composition comprising 25mM histidine + 2.5mM IMP with a composition comprising 2.5mM IMP;
Figure 3 shows the results of a difference test of a composition comprising 25mM alanine + 2.5mM GMP with a composition comprising 25mM alanine;
Figure 4 shows the results of a difference test of a composition comprising 25mM alanine + 2.5mM GMP with a composition comprising 2.5mM GMP;
Figure 5 shows the results of a difference test of a composition comprising 25mM glycine + 2.5mM AMP with a composition comprising 25mM glycine;
Figure 6 shows the results of a difference test of a composition comprising 25mM glycine + 2.5mM AMP with a composition comprising 2.5mM AMP;
Figure 7 shows the results of a difference test of a composition comprising 25mM histidine + 2.5mM IMP/GMP + 4000ppb (4ppm) furaneol with a composition comprising 2.5mM IMP/GMP + 4000ppb (4ppm) furaneol;
Figure 8 shows the results of a difference test of a composition comprising 2.5mM IMP/GMP + 4ppm furaneol with a composition comprising 2.5mM IMP/GMP;
Figure 9 shows the results of a difference test of a composition comprising 25mM histidine + 1.25mM IMP/GMP + 4ppm furaneol with a composition comprising 25mM histidine + 1.25mM IMP/GMP;
Figure 10 shows the results of a difference test of a gel composition comprising 25mM histidine + 2ppm furaneol with a gel composition comprising 25mM histidine;
Figure 11 shows the results of a difference test of a composition comprising 25mM histidine + 2.5mM GMP + 4ppm furaneol with a composition comprising 25mM histidine + 2.5mM GMP;
Figure 12 shows the results of a difference test of a composition comprising 25mM histidine + 2.5mM GMP + 5ppb sotolon with a composition comprising 25mM histidine + 2.5mM GMP;
Figure 13 shows the results of a difference test of a pet food comprising 25mM histidine + 2.5mM IMP/GMP + 4ppm furaneol with a pet food comprising a conventional reaction flavour system.
Figure 14 shows the resulting dose response curves of each amino acid of the invention that were screened *in vitro* for their ability to activate the T1R1/T1R3 receptor in the presence of 0.2mM IMP. The corresponding EC₅₀ values are shown in the table.
Figure 15 shows the dose response curves of nucleotides of the invention that were screened *in vitro* for their ability to activate the T1R1/T1R3 receptor in the presence of 20mM alanine. The corresponding EC₅₀ values are shown in the table.

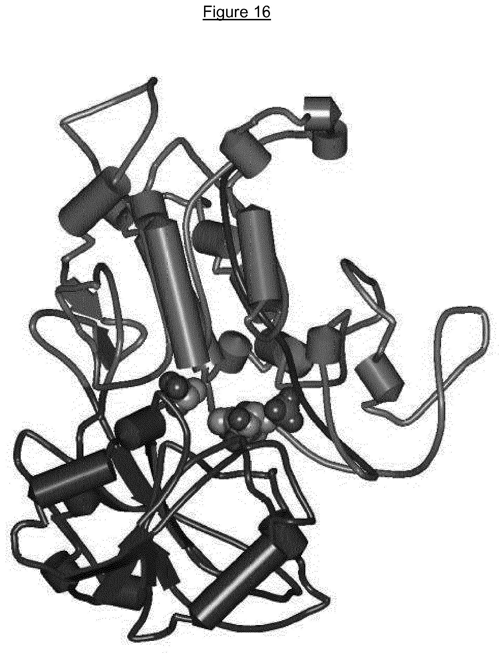

Figure 16 shows the predicted structure of the T1R1/T1R3 umami receptor.
Figure 17 shows a schematic of the predicted structure of the umami receptor; and
Figure 18 shows a sequence alignment of the human, feline, canine, mouse and rat umami receptors.

### Examples

All amino acids used in the examples were of the L-form. Ajitide is a 50:50 mixture of GMP:IMP.

Examples 1-6, 10, 14 and 15 are reference examples.

### Example 1

Cats were allowed access to water containing 25mM histidine + 2.5mM IMP and to water containing 25mM histidine.

The methodology used a 2-bottle choice test with 24 cats (the final number of cats for each test can vary due to data being discarded by spillage, etc.). Cats were housed individually during trial periods and had free access to water available between testing periods. The test involved a choice test between the tastant/ mixture at a given concentration dissolved in deionised water versus deionised water only or another tastant/ mixture. Control was made for positional bias (e.g. A/B exposure 1 and B/ A exposure 2) and evaporation loss. The testing time was 36 hours (i.e. 18 hours per day, allowing a two-day crossover). Following two consecutive days of each testing, cats had two consecutive days of rest. Cats were offered a dry diet as a single meal at the start of the test period for one hour, calculated to meet the individual requirements for each cat.

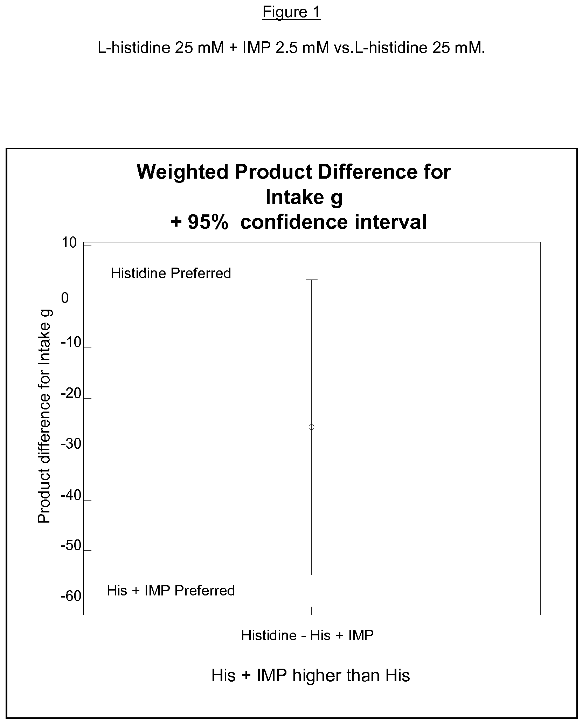

The results are shown in the table below, and in Figure 1.

### Analysis of Intake g

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 24 | 3.33 | 0.0805 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| Histidine - His + IMP | -25.74 | 14.11 | -54.86 | 3.38 |

Intake of the combination of histidine + IMP, was on average 25.74g more that the intake of histidine alone, and shows a clear preference for the combination over histidine alone.

### Example 2

Cats were allowed access to water containing 25mM histidine + 2.5mM IMP and to water containing 2.5mM IMP alone.

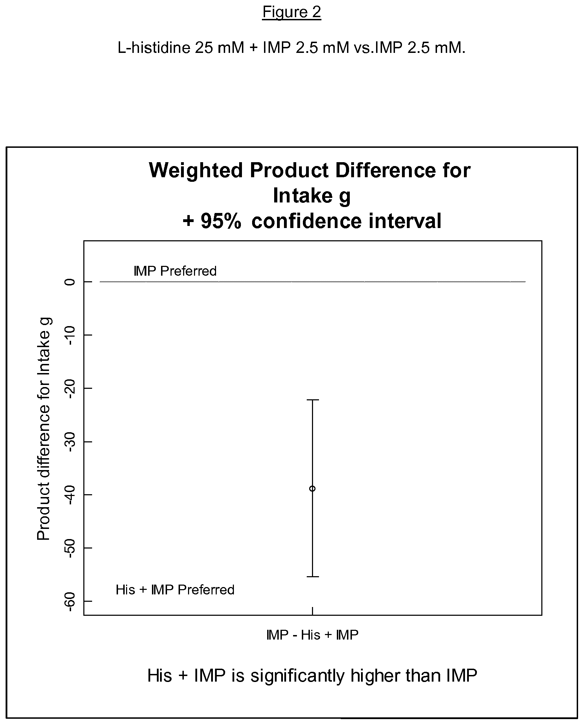

The results are shown in the table below, and in Figure 2.

### Analysis of Intake g

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 24 | 23.30 | 0.0001 |

**Table of Mean Product Difference, Standard Error & 95% Confidence Intervals**

| **Product Difference** | **Mean** | **Error** | **95% Confidence Interval** | |
|---|---|---|---|---|
| | | | **Lower** | **Upper** |
| IMP - His + IMP | -38.81 | 8.04 | -55.40 | -22.22 |

Intake of the combination of histidine + IMP, was on average 38.81 g more that the intake of IMP alone, which is a significant difference and shows a clear preference for the combination over IMP alone. The results of examples 1 and 2 together show that a combination of histidine and IMP is preferable to either of the compounds alone.

### Example 3

A difference test was carried out as described in Example 1 to compare a composition containing 25mM alanine + 2.5mM GMP with a composition containing 25mM alanine only.

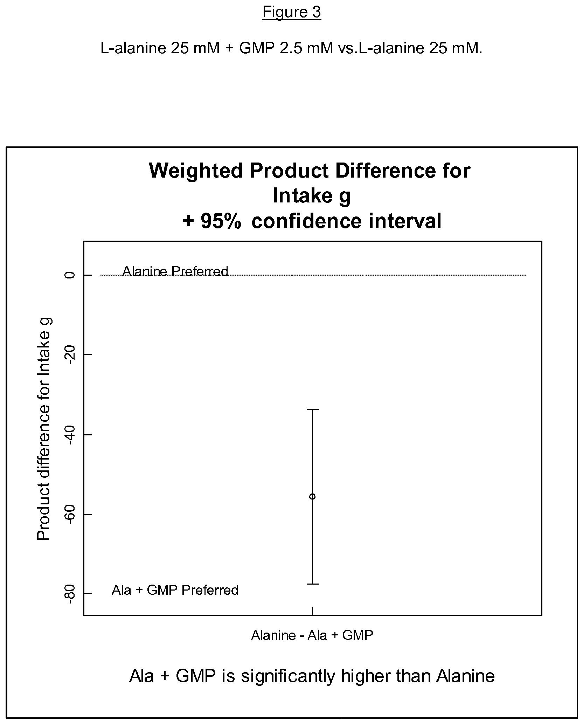

The results are shown in the table below and in Figure 3.

### Analysis of Intake g

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 24 | 27.57 | 0.0000 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| Alanine-Ala+GMP | -55.62 | 10.59 | -77.48 | -33.76 |

It can be seen that the intake of the combination of alanine + GMP was, on average, 55.62g more than the intake of water containing alanine alone which is a significant difference. This shows that the animals prefer the combination of alanine + GMP to alanine alone.

### Example 4

The difference test was carried out as described in example 2; however the composition containing 25mM alanine + 2.5mM GMP was compared with a composition containing 2.5mM GMP only.

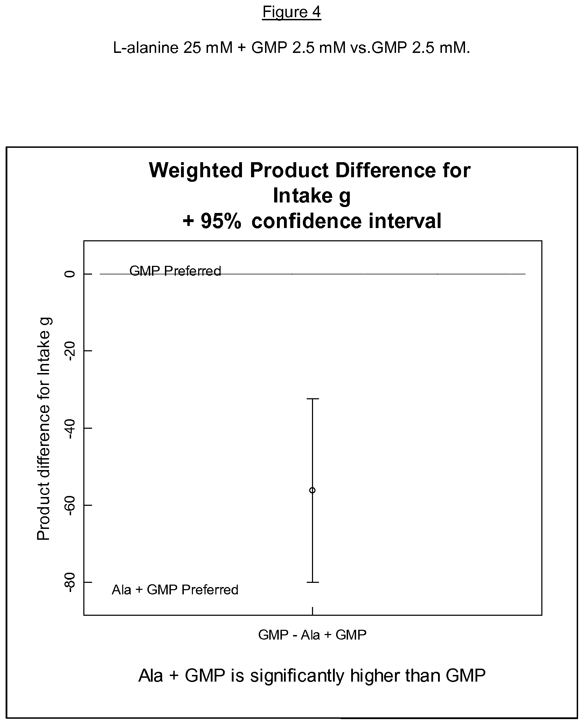

The results are shown in the table below and in Figure 4.

### Analysis of Intake g

### ANOVA Table for Fixed Effects

| **Factor** | **Degrees of Freedom** | | **P-value** | **P-value** |
|---|---|---|---|---|
| | **Numerator** | **Denominator** | | |
| Product Difference | 1 | 24 | 23.86 | 0.0001 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| GMP - Ala + GMP | -56.16 | 11.50 | -79.88 | -32.43 |

It can be seen that the intake of GMP + alanine was, on average, 56.16g more than the intake of GMP alone, which is a significant difference, and shows that the animals significantly prefer the combination of alanine + GMP to GMP alone.

The results of Example 3 and 4 together show that a combination of alanine + GMP is preferable to either of the compounds alone.

### Example 5

A difference test was carried out as described in Example 1 to compare a composition containing 25mM glycine + 2.5mM AMP with a composition comprising 25mM glycine only.

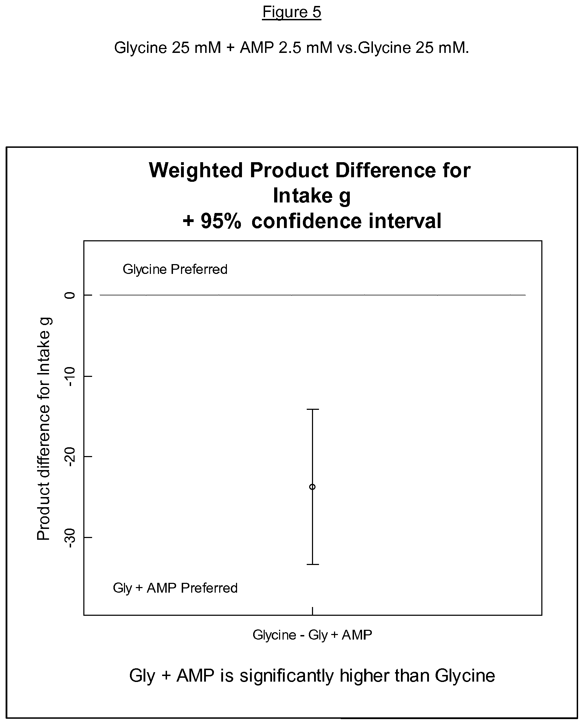

The results are shown in the table below and in Figure 5.

### Analysis of Intake g

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 24 | 25.83 | 0.0000 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| Glycine - Gly + AMP | -23.79 | 4.68 | -33.46 | -14.13 |

It can be seen that the intake of glycine + AMP was, on average, 23.79g more than the intake of glycine alone. This shows that the animals significantly prefer the combination of glycine + AMP to glycine alone.

### Example 6

The difference test was carried out as described in Example 4; however the composition containing 25mM glycine + 2.5mM AMP, was compared with a composition containing 2.5mM AMP only.

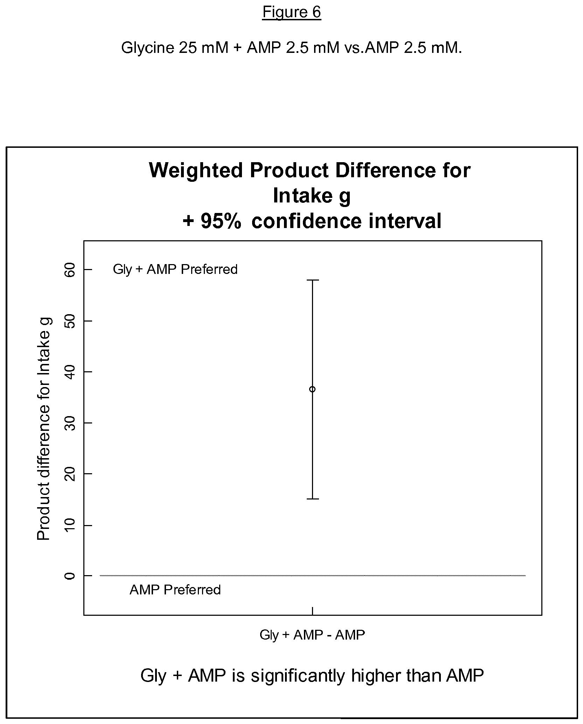

The results are shown in the table below, and in Figure 6.

### Analysis of Intake g

### ANOVA Table for Fixed Effects

| **Factor** | **Degrees of Freedom** | | **F-value** | **P-value** |
|---|---|---|---|---|
| | **Numerator** | **or Denominator** | | |
| Product Difference | 1 | 23 | 12.46 | 0.0018 |

**Table of Mean Product Difference, Standard Error & 95% Confidence Intervals**

| **Product Difference** | **Mean** | **Standard Error** | **95%; Confidence Interval** | |
|---|---|---|---|---|
| | | | **Lower** | **Upper** |
| Gly + AMP - AMP | 36.63 | 10.38 | 15.16 | 58.09 |

It can be seen that the intake of glycine + AMP was, on average, 36.63g more than the intake of AMP, and shows that the animals significantly prefer the combination of glycine + AMP to AMP alone.

The results of Examples 5 and 6 together show that a combination of glycine + AMP is preferable to either of the compounds alone.

### Example 7

A difference test was carried out as described in Example 1 to compare a composition containing 25mM histidine + 2.5mM IMP/GMP (Ajitide) + 4ppm furaneol, with a composition comprising 2.5mM IMP/GMP (Ajitide) + 4ppm furaneol only.

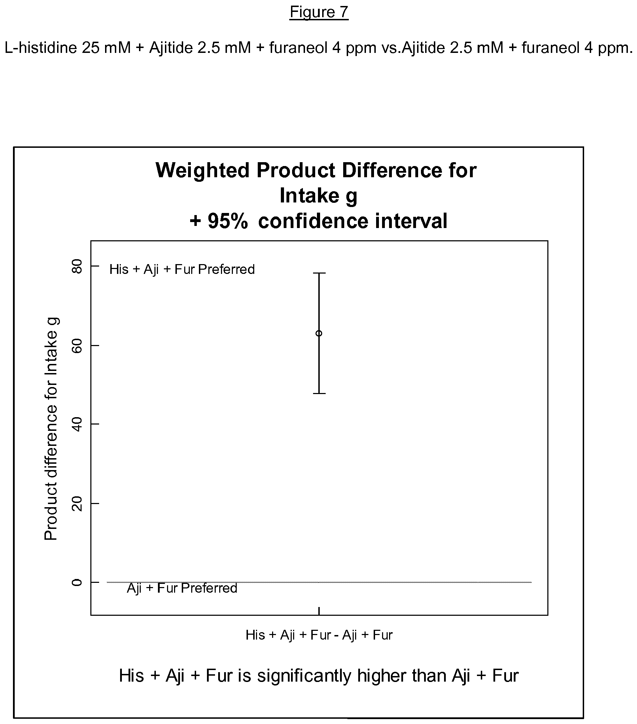

The results are shown in the table below and in Figure 7.

### Analysis of Intake g

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 24 | 72.76 | 0.0000 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| His + Aji + Fur - Aji + Fur | 63.07 | 7.39 | 47.81 | 78.33 |

It can be seen that the intake of histidine + IMP/GMP(Aji) + furaneol was, on average, 63.07g more than the intake of IMP/GMP + furaneol, and shows that the animals significantly prefer the combination of histidine + IMP/GMP + furaneol to IMP/GMP + furaneol.

### Example 8

A difference test was carried out as described in Example 1 to compare a composition containing 2.5mM IMP/GMP (Ajitide) + 4ppm furaneol, with a composition comprising 2.5mM IMP/GMP (Ajitide) only.

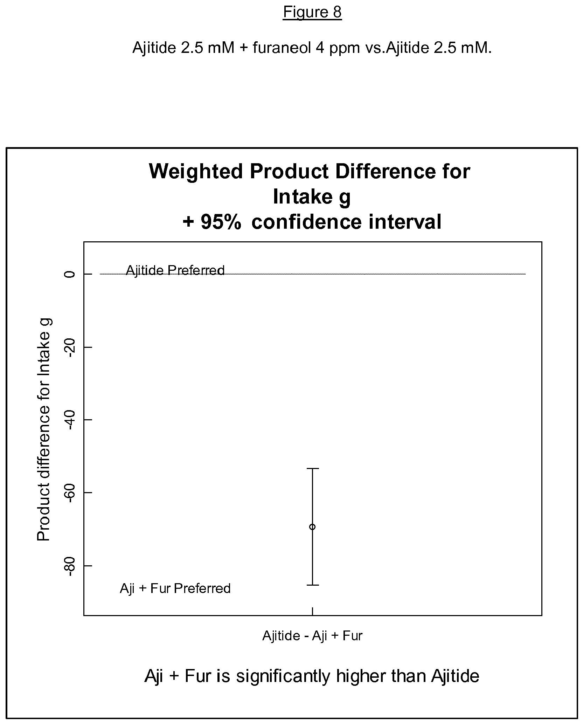

The results are shown in the table below and in Figure 8.

### Analysis of Intake g

### ANOVA Table for Fixed Effects

| **Factor** | **Degrees of Freedom** | | **F-value** | **P-value** |
|---|---|---|---|---|
| | **Numerator** | **Denominator** | | |
| Product Difference | | 24 | 80.28 | 0.0000 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| Ajitide - Aji + Fur | -69.29 | 7.73 | -85.25 | -53.33 |

It can be seen that the intake of IMP/GMP(Aji) + furaneol was, on average, 69.29g more than the intake of IMP/GMP (Aji) alone, and shows that the animals significantly prefer the combination of IMP/GMP (Aji) + furaneol to IMP/GMP (Aji) alone.

### Example 9

A difference test was carried out as for Example 6, however, a composition containing 25mM histidine + 1.25mM IMP/GMP(Aji) + 4ppm furaneol, with a composition comprising 25mM histidine + 1.25mM IMP/GMP (Aji) only.

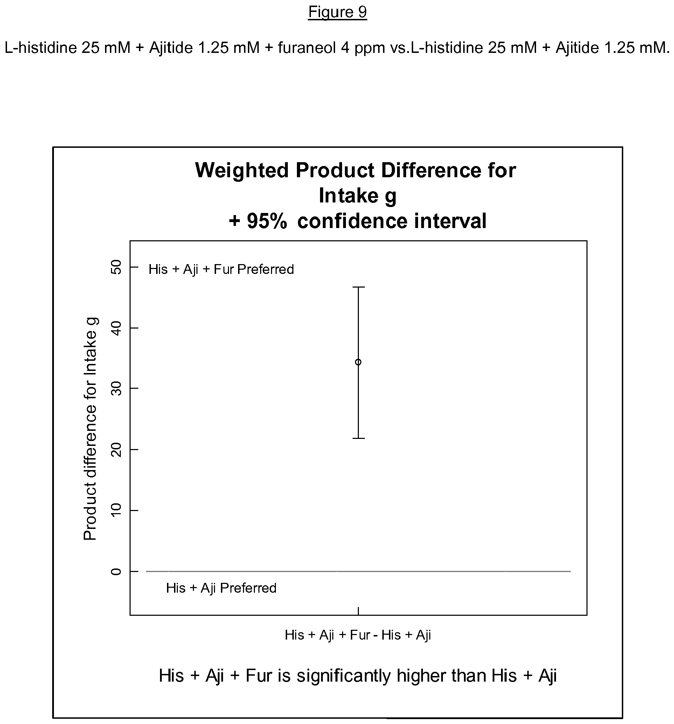

The results are shown below and in figure 9.

### Analysis of Intake g

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 23 | 32.47 | 0.0000 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| His + Aji + Fur - His + Aji | 34.29 | 6.02 | 21.84 | 46.74 |

It can be seen that the intake of histidine + IMP/GMP + furaneol was on average 34.29g more than the intake of histidine + IMP/GMP, and thus shows that the animals significantly preferred the combination of histidine + IMP/GMP + furaneol to histidine + IMP/GMP.

### Example 10

Cats were allowed access to gelatine gel containing either 25mM histidine + 2ppm furaneol or a gel comprising 25mM histidine only). The methodology used a 2-bowl choice test with 30 cats (the final number of cats for each test can vary due to data being discarded by spillage, etc.). Cats were housed individually during trial periods and had free access to water available between testing periods. The test involved a choice test between the tastant/ mixture at a given concentration dissolved in a gelatine gel versus another tastant/ mixture. Control was made for positional bias (e.g. A/B exposure 1 and B/ A exposure 2). The testing time was 1 hour (i.e. 30 minutes per day, allowing a two-day crossover). Following two consecutive days of each testing, cats had two consecutive days of rest. Cats were offered a dry diet as a single meal prior to the start of the test period for 30 minutes, calculated to meet the individual requirements for each cat.

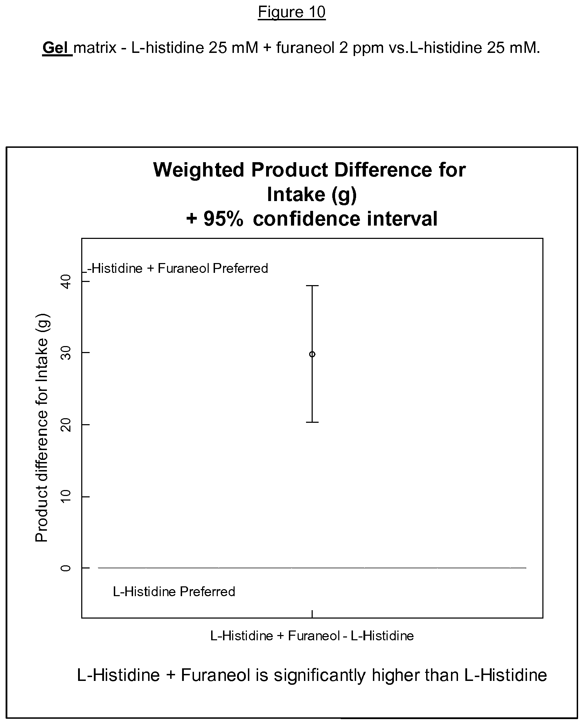

The results are shown below and in figure 10.

### Analysis of Intake (g)

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 27 | 41.92 | 0.0000 |

**Table of Mean Product Difference, Standard Error & 95% Confidence Intervals**

| **Product Diffference** | **Mean** | **Standard Error** | **95% Confidence** | |
|---|---|---|---|---|
| | | | **Lower** | **Upper** |
| His + Fur - His | 29.84 | 4.61 | 20.39 | 39.30 |

It can be seen that the intake of histidine + furaneol was an average 29.84g more than the intake of histidine alone, and thus shows that the animals significantly prefer the combination of histidine + furaneol to histidine alone. This example also shows that a preference effect can be seen whether the base composition is water or a gel matrix.

### Example 11

A difference test was carried out as described in Example 1 to compare a composition containing 25mM histidine + 2.5mM GMP + 4ppm furaneol, with a composition comprising 2.5mM GMP + 25mM histidine only.

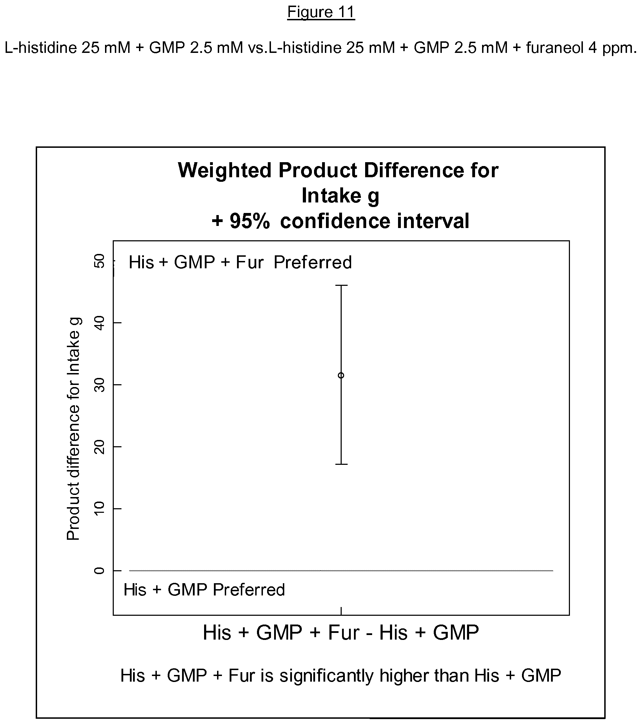

The results are shown in the table below and in Figure 11.

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 24 | 20.36 | 0.0001 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| His + GMP + Fur - His + GMP | 31.61 | 7.00 | 17.15 | 46.07 |

It can be seen that the intake of histidine + GMP + furaneol was, on average, 31.61 g more than the intake of GMP + histidine, and shows that the animals significantly prefer the combination of histidine + GMP + furaneol to GMP + histidine.

### Example 12

A difference test was carried out as described in Example 1 to compare a composition containing 25mM histidine + 2.5mM GMP + 5ppm sotolon, with a composition comprising 2.5mM GMP + 25mM histidine only.

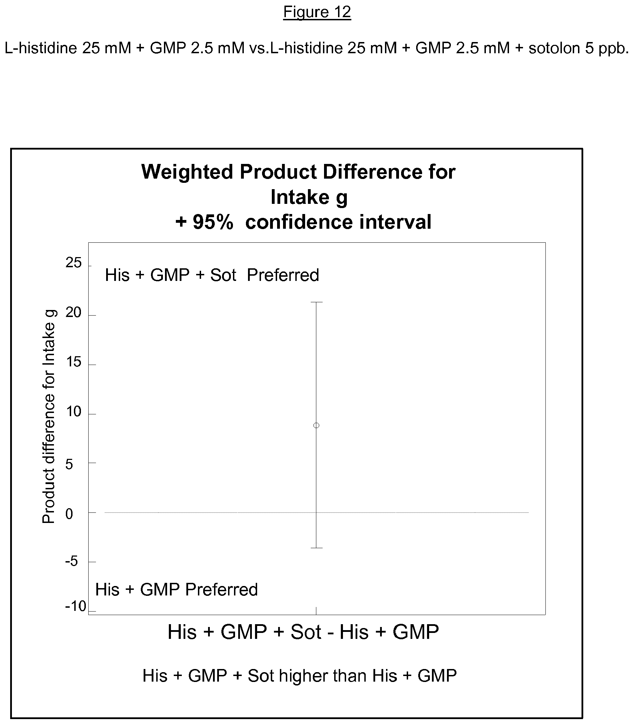

The results are shown in the table below and in Figure 12.

### ANOVA Table for Fixed Effects

| **Factor** | **Degrees of Freedom** | | **F-value** | **P-value** |
|---|---|---|---|---|
| | **Numerator** | **Denominator** | | |
| Product Difference | 1 | 24 | 2.15 | 0.1553 |

**Table of Mean Product Difference, Standard Error & 95% Confidence Intervals**

| **Product Difference** | **Mean** | **Standard Error** | **95% Confidence Interval** | |
|---|---|---|---|---|
| | | | **Lower** | **Upper** |
| His + GMP + Sot - His + GMP | 8.85 | 6.03 | -3.60 | 21.30 |

It can be seen that the intake of histidine+ GMP + sotolon was, on average, 8.85g more than the intake of GMP + histidine, and shows that the animals prefer the combination of histidine + GMP + sotolon to GMP + histidine.

### Example 13

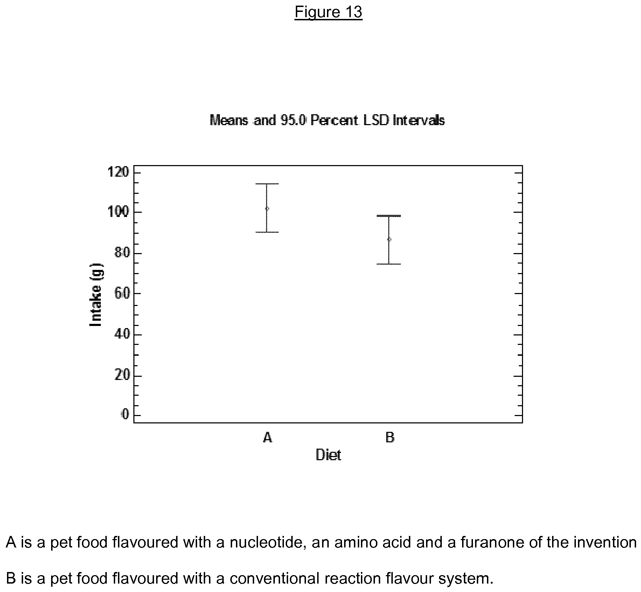

A difference test was carried out as previously described; however the compositions were a wet cat food either comprising histidine + IMP/GMP (Ajitide) + furaneol or a conventional reaction flavour system. The pet food comprising histidine +IMP/GMP + furaneol was preferred by the cats. Results are shown in Figure 13.

### Example 14

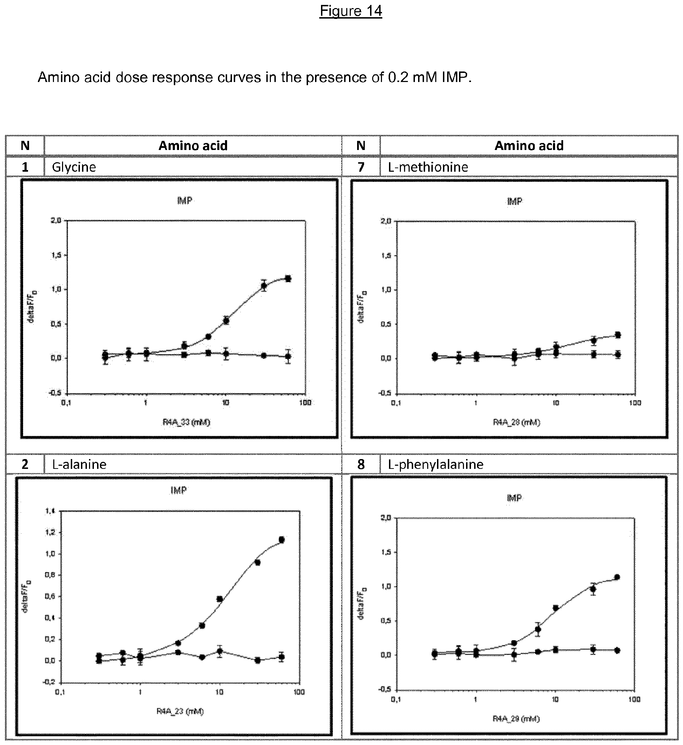

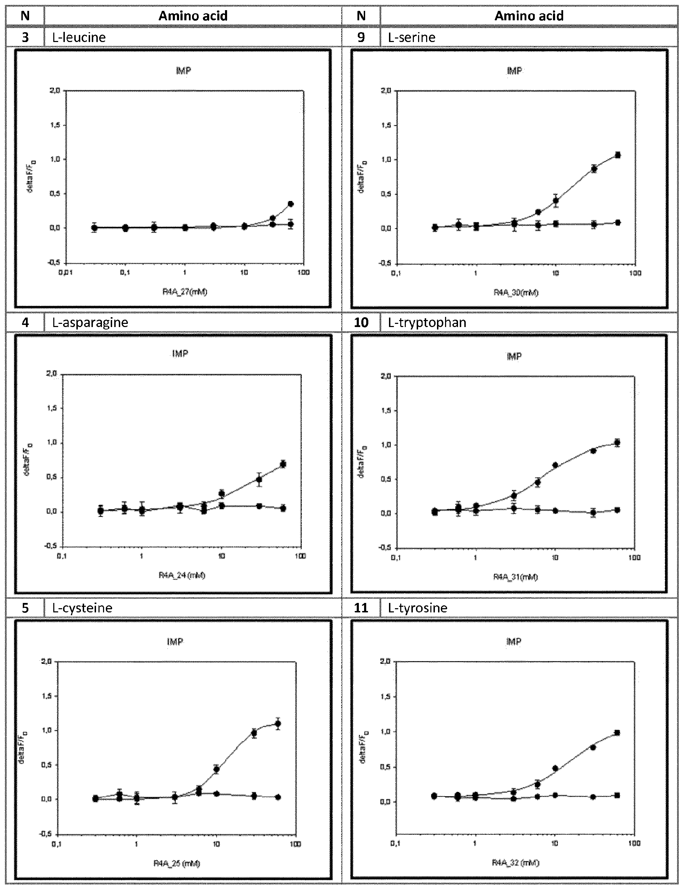

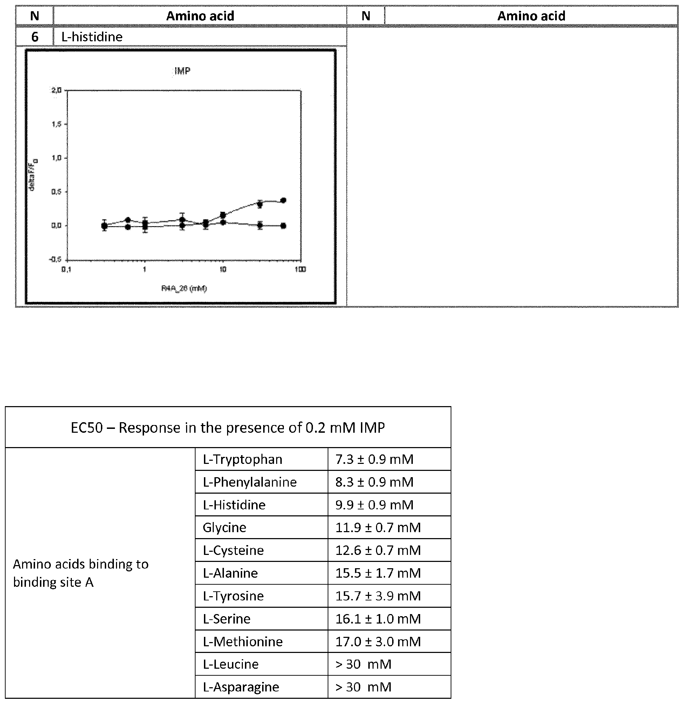

*In vitro* screening was carried out in order to establish which amino acids bind and activate the umami receptor. Results are shown in Figure 14.

### Example 15

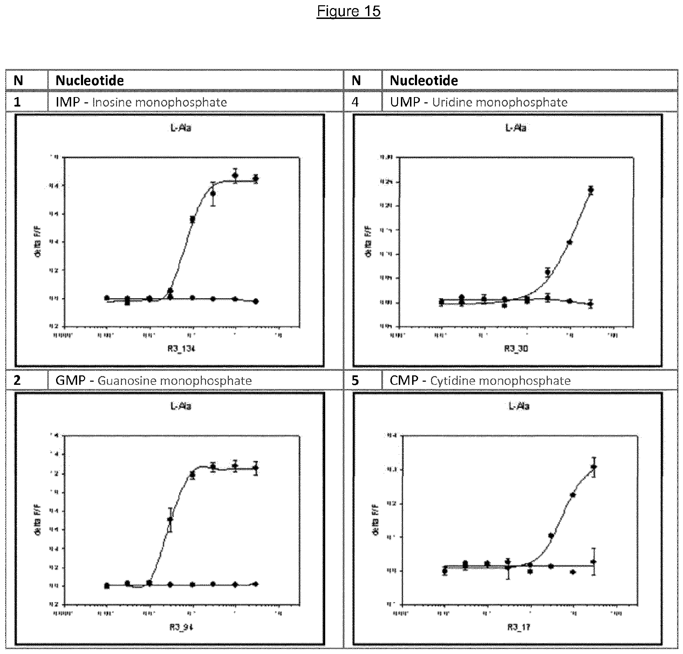

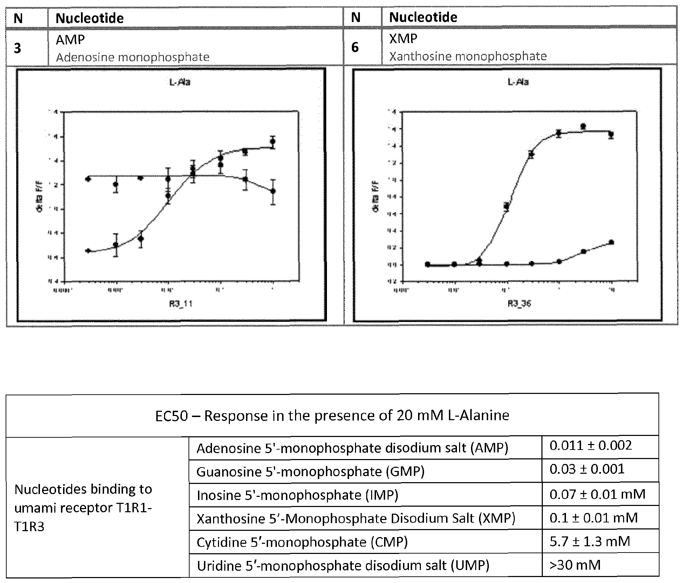

*In vitro* screening was carried out in order to establish which nucleotides bind and activate the umami receptor. Results are shown in Figure 15.

## Claims

1. Use of one or more nucleotides, one or more amino acids selected from the group consisting of glycine, asparagine, alanine, cysteine, histidine, leucine, methionine, phenylalanine, serine, tryptophan and tyrosine and one or more furanones for increasing the palatability of a foodstuff to a companion animal.

2. The use according to claim 1, wherein the one or more nucleotides is/are selected from the group consisting of cytidine monophosphate (CMP), xanthosine monophosphate (XMP), uridine monophosphate (UMP), adenosine monophosphate (AMP), guanosine monophosphate (GMP) and inosine monophosphate (IMP), optionally wherein the one or more nucleotides is a mixture of GMP and IMP.

3. The use according to any one of claims 1 to 2 4, wherein the one or more furanones is/are a compound according to formula I or formula II 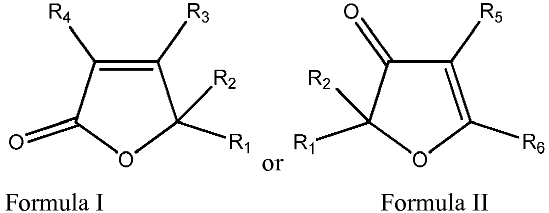
wherein each R₁ and R₂ are independently selected from hydrogen or C₁₋₆ alkyl, preferably hydrogen, methyl or ethyl;
R₃ is hydrogen, hydroxyl or C₁₋₆ alkyl, preferably methyl;
R₄ is hydrogen, hydroxyl or C₁₋₆ alkyl, preferably hydroxyl;
R₅ is hydrogen, hydroxyl, C₁₋₆ alkyl, C₁₋₆ alkoxy, 5 or 6 membered saturated heterocycle or -OC(O)R₇, preferably hydroxyl, -OCH₃, -OCH₂CH₃, -OC(O)CH₃, methyl or pyrrolidine;
R₆ is hydrogen or C₁₋₆ alkyl, preferably hydrogen or methyl;
R₇ is C₁₋₆ alkyl, preferably methyl.

4. The use according to any one of claims 1 to 3, wherein the one or more furanone is selected from the group consisting of furaneol, (2R)-(+)-homofuraneol I, (2R)-(+)-homofuraneol II, (2S)-(-)-homofuraneol I, (2S)-(-)-homofuraneol II, sotolon, norfuraneol, abhexon, mesifuranone or dimethoxyfuranone.

5. The use according to any one of claims 1 to 4, wherein the nucleotide, the amino acid and the furanone are in addition to any nucleotides, amino acids and furanones that may be found in any meat, vegetable or dairy component of the foodstuff.

6. The use according to any one of claims 1 to 5, wherein the one or more nucleotide is present in an amount of less than 100 mM, optionally wherein the one or more amino acid is present at an amount of less than 1M, optionally wherein the one or more furanone is present at an amount of less than 40ppm.

7. A pet foodstuff comprising one or more nucleotides, one or more amino acids selected from the group consisting of glycine, alanine, cysteine, histidine, leucine, methionine, phenylalanine, serine, tryptophan and tyrosine, and one or more furanones.

8. A pet foodstuff according to claim 7, wherein the one or more nucleotide, the one or more amino acid and the one or more furanone are in a combination selected from the group consisting of:
| | | |
|---|---|---|
| GMP between 1 to 99% and IMP between 1 to 99% | Histidine | Furaneol |
| GMP between 1 to 99% and IMP between 1 to 99% | Glycine | Furaneol |
| GMP between 1 to 99% and IMP between 1 to 99% | Alanine | Furaneol |
| GMP between 1 to 99% and IMP between 1 to 99% | Histidine | Sotolon |
| GMP between 1 to 99% and IMP between 1 to 99% | Glycine | Sotolon |
| GMP between 1 to 99% and IMP between 1 to 99% | Alanine | Sotolon |
| IMP | Histidine | Furaneol |
| IMP | Glycine | Furaneol |
| IMP | Alanine | Furaneol |
| IMP | Histidine | Sotolon |
| IMP | Glycine | Sotolon |
| IMP | Alanine | Sotolon |
| GMP | Histidine | Furaneol |
| GMP | Glycine | Furaneol |
| GMP | Alanine | Furaneol |
| GMP | Histidine | Sotolon |
| GMP | Glycine | Sotolon |
| GMP | Alanine | Sotolon |
| AMP | Histidine | Furaneol |
| AMP | Glycine | Furaneol |
| AMP | Alanine | Furaneol |
| AMP | Histidine | Sotolon |
| AMP | Glycine | Sotolon |
| AMP | Alanine | Sotolon |

9. A method for increasing acceptance of a foodstuff in a companion animal comprising allowing the animal access to a foodstuff comprising at least one nucleotide, at least one amino acid selected from the group consisting of glycine, alanine, cysteine, histidine, leucine, methionine, phenylalanine, serine, tryptophan and tyrosine and one or more furanones as defined in any one of claims 7 or 8.

10. A process of preparing a pet foodstuff comprising at least one nucleotide, at least one amino acid selected from the group consisting of glycine, alanine, cysteine, histidine, leucine, methionine, phenylalanine, serine, tryptophan and tyrosine, and one or more furanones the process comprising the steps of adding and mixing at least one nucleotide, at least one amino acid selected from glycine, alanine, cysteine, histidine, leucine, methionine, phenylalanine, serine, tryptophan and tyrosine and one or more furanones with a pet foodstuff.

11. A process of preparing a pet foodstuff according to claim 10, wherein the process comprises combining one or more pet food ingredient; the at least one amino acid; the at least one nucleotide, wherein the amino acid, one or more furanones, nucleotide and furanones are added together or separately, and wherein the amino acid, the nucleotide and the furanones together provide no more than 30 wt% of the dry matter that is contained in the foodstuff.

12. A process according to any one of claims 10 or 11, wherein the one or more pet food ingredients include one or more of the edible materials selected from meat, animal fat, blood plasma, marrowbone, vegetable protein, vegetable fat, milk protein, grains and starch, wherein the one or more edible ingredients provide at least 60 wt % of the dry matter that is contained in the pet foodstuff.

13. A method for increasing the palatability of a foodstuff, the method comprising adding to a foodstuff during or after manufacture at least one nucleotide, at least one amino acid selected from the group consisting of glycine, alanine, cysteine, histidine, leucine, methionine, phenylalanine, serine, tryptophan and tyrosine, and one or more furanones.

## Patentansprüche

1. Verwendung eines oder mehr Nucleotide, einer oder mehr Aminosäuren ausgewählt aus der Gruppe bestehend aus Glycin, Asparagin, Alanin, Cystein, Histidin, Leucin, Methionin, Phenylalanin, Serin, Tryptophan und Tyrosin und einem oder mehr Furanonen zum Erhöhen der Schmackhaftigkeit von Futter für einen tierischen Gefährten.

2. Verwendung nach Anspruch 1, wobei das eine oder mehr Nucleotide aus der Gruppe ausgewählt ist/sind bestehend aus Cystidinmonophosphat (CMP), Xanthosinmonophosphat (XMP), Uridinmonophosphat (UMP), Adenosinmonophosphat (AMP), Guanosinmonophosphat (GMP) und Inosinmonophosphat (IMP), wobei wahlweise das eine oder mehr Nucleotide eine Mischung von GMP und IMP ist/sind.

3. Verwendung nach einem der Ansprüche 1 bis 2, wobei das eine oder mehr Furanone eine Verbindung der Formel I oder Formel II entsprechend ist/sind 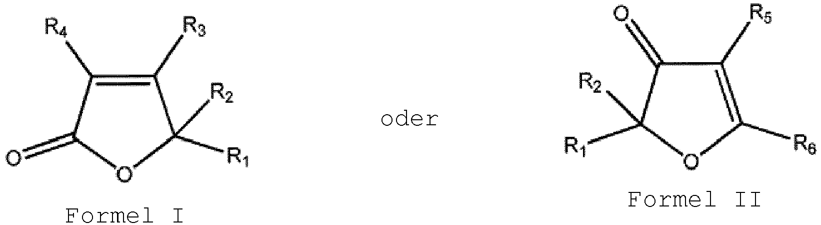
wobei jedes R₁ und R₂ unabhängig unter Wasserstoff oder C₁₋₆-Alkyl, bevorzugt Wasserstoff, Methyl oder Ethyl, ausgewählt ist;
R₃ Wasserstoff, Hydroxyl oder C₁₋₆-Alkyl, bevorzugt Methyl, ist;
R₄ Wasserstoff, Hydroxyl oder C₁₋₆-Alkyl, bevorzugt Hydroxyl, ist;
R₅ Wasserstoff, Hydroxyl, C₁₋₆-Alkyl, C₁₋₆-Alkoxy, 5- oder 6-gliedriger gesättigter Heterozyklus oder-OC(O)R₇, bevorzugt Hydroxyl, -OCH₃, -OCH₂CH₃, -OC(O)CH₃, Methyl oder Pyrrolidin, ist;
R₆ Wasserstoff oder C₁₋₆-Alkyl, bevorzugt Wasserstoff oder Methyl, ist;
R₇ C₁₋₆-Alkyl, bevorzugt Methyl, ist.

4. Verwendung nach einem der Ansprüche 1 bis 3, wobei das eine oder mehr Furanone aus der Gruppe ausgewählt ist/sind bestehend aus Furaneol, (2R)-(+)-Homofuraneol I, (2R)-(+)-Homofuraneol II, (2S)-(-)-Homofuraneol I, (2S)-(-)-Homofuraneol II, Sotolon, Norfuraneol, Abhexon, Mesifuranon oder Dimethoxyfuranon.

5. Verwendung nach einem der Ansprüche 1 bis 4, wobei das Nucleotid, die Aminosäure und das Furanon zusätzlich zu irgendwelchen Nucleotiden, Aminosäuren und Furanonen, die ein irgendeiner Fleisch-, Gemüse- oder Molkereiproduktkomponente des Futters anzutreffen sind, vorliegen.

6. Verwendung nach einem der Ansprüche 1 bis 5, wobei das eine oder mehr Nucleotide in einer Menge von weniger als 100 mM vorliegt/vorliegen, wobei wahlweile die eine oder mehr Aminosäuren in einer Menge von weniger als 1 M vorliegt/vorliegen, wobei wahlweise das eine oder mehr Furanone in einer Menge von weniger als 40 ppm vorliegt/vorliegen.

7. Haustierfutter umfassend ein oder mehr Nucleotide, eine oder mehr Aminosäuren ausgewählt aus der Gruppe bestehend aus Glycin, Alanin, Cystein, Histidin, Leucin, Methionin, Phenylalanin, Serin, Tryptophan und Tyrosin und einem oder mehr Furanonen.

8. Haustierfutter nach Anspruch 7, wobei das eine oder mehr Nucleotide, die eine oder mehr Aminosäuren und das eine oder mehr Furanone in einer Kombination vorliegen, ausgewählt aus der Gruppe bestehend aus:
| | | |
|---|---|---|
| GMP zwischen 1 und 99 % und IMP zwischen 1 und 99 % | Histidin | Furaneol |
| GMP zwischen 1 und 99 % und IMP zwischen 1 und 99 % | Glycin | Furaneol |
| GMP zwischen 1 und 99 % und IMP zwischen 1 und 99 % | Alanin | Furaneol |
| GMP zwischen 1 und 99 % und IMP zwischen 1 und 99 % | Histidin | Sotolon |
| GMP zwischen 1 und 99 % und IMP zwischen 1 und 99 % | Glycin | Sotolon |
| GMP zwischen 1 und 99 % und IMP zwischen 1 und 99 % | Alanin | Sotolon |
| IMP | Histidin | Furaneol |
| IMP | Glycin | Furaneol |
| IMP | Alanin | Furaneol |
| IMP | Histidin | Sotolon |
| IMP | Glycin | Sotolon |
| IMP | Alanin | Sotolon |
| GMP | Histidin | Furaneol |
| GMP | Glycin | Furaneol |
| GMP | Alanin | Furaneol |
| GMP | Histidin | Sotolon |
| GMP | Glycin | Sotolon |
| GMP | Alanin | Sotolon |
| AMP | Histidin | Furaneol |
| AMP | Glycin | Furaneol |
| AMP | Alanin | Furaneol |
| AMP | Histidin | Sotolon |
| AMP | Glycin | Sotolon |
| AMP | Alanin | Sotolon |

9. Verfahren zum Erhöhen der Akzeptanz eines Futters durch einen tierischen Gefährten, umfassend Gestatten, dass das Tier Zugang zu einem Futter hat umfassend mindestens ein Nucleotid, mindestens eine Aminosäure ausgewählt aus der Gruppe bestehend aus Glycin, Alanin, Cystein, Histidin, Leucin, Methionin, Phenylalanin, Serin, Tryptophan und Tyrosin und einem oder mehr Furanone wie in irgendeinem der Ansprüche 7 oder 8 definiert.

10. Verfahren für die Herstellung eines Tierfutters umfassend mindestens ein Nucleotid, mindestens eine Aminosäure ausgewählt aus der Gruppe bestehend aus Glycin, Alanin, Cystein, Histidin, Leucin, Methionin, Phenylalanin, Serin, Tryptophan und Tyrosin und einem oder mehr Furanonen, wobei das Verfahren die Schritte umfasst des Zusetzens und Mischens mindestens eines Nucleotids, mindestens einer Aminosäure ausgewählt aus Glycin, Alanin, Cystein, Histidin, Leucin, Methionin, Phenylalanin, Serin, Tryptophan und Tyrosin und einem oder mehr Furanonen mit einem Tierfutter.

11. Verfahren für die Herstellung eines Tierfutters nach Anspruch 10, wobei das Verfahren das Kombinieren eines oder mehrerer Tierfutterbestandteile, der mindestens einen Aminosäure, des mindestens einen Nucleotids umfasst, wobei die Aminosäure, ein oder mehrere Furanone, das Nucleotid und die Furanone zusammen oder getrennt zugegeben werden, und wobei die Aminosäure, das Nucleotid und die Furanone zusammen nicht mehr als 30 Gew.-% der Trockensubstanz, die in dem Futter enthalten ist, bereitstellen.

12. Verfahren nach irgendeinem der Ansprüche 10 oder 11, wobei der eine oder mehr Tierfutterbestanteile ein oder mehr fressbare Materialien enthalten ausgewählt unter Fleisch, tierischem Fett, Blutplasma, Markknochen, pflanzlichem Protein, pflanzlichem Fett, Milchprotein, Getreide und Stärke, wobei der eine oder mehr Bestandteile mindestens 60 Gew.-% der Trockensubstanz, die in dem Haustierfutter enthalten ist, bereitstellt.

13. Verfahren zum Erhöhen der Schmackhaftigkeit eines Futters, wobei das Verfahren das Zusetzen zu einem Futter während oder nach der Herstellung von mindestens einem Nucleotid, mindestens einer Aminosäure ausgewählt aus der Gruppe bestehend aus Glycin, Alanin, Cystein, Histidin, Leucin, Methionin, Phenylalanin, Serin, Tryptophan und Tyrosin und einem oder mehr Furanonen umfasst.

## Revendications

1. Utilisation d'un ou plusieurs nucléotides, un ou plusieurs acides aminés choisis dans le groupe constitué des glycine, asparagine, alanine, cystéine, histidine, leucine, méthionine, phénylalanine, sérine, tryptophane et tyrosine et une ou plusieurs furanones pour augmenter la palatabilité d'un aliment pour un animal de compagnie.

2. Utilisation selon la revendication 1, dans laquelle les un ou plusieurs nucléotides est/sont choisis dans le groupe constitué des cytidine monophosphate (CMP), xanthosine monophosphate (XMP), uridine monophosphate (UMP), adénosine monophosphate (AMP), guanosine monophosphate (GMP) et inosine monophosphate (IMP), facultativement dans laquelle
les un ou plusieurs nucléotides sont un mélange de GMP et d'IMP.

3. Utilisation selon l'une quelconque des revendications 1 à 2, dans laquelle les une ou plusieurs furanones est/sont un composé selon la formule I ou la formule II 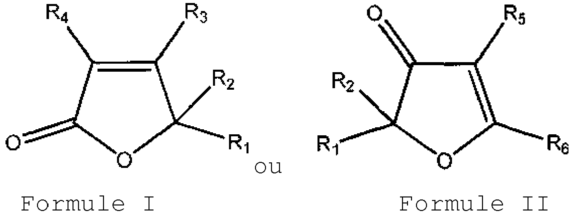
dans lequel chaque R₁ et R₂ est indépendamment choisi parmi hydrogène ou alkyle en C₁₋₆, de préférence hydrogène, méthyle ou éthyle ;
R₃ est hydrogène, hydroxyle ou alkyle en C₁₋₆, de préférence méthyle ;
R₄ est hydrogène, hydroxyle ou alkyle en C₁₋₆, de préférence hydroxyle ;
R₅ est hydrogène, hydroxyle, alkyle en C₁₋₆, alcoxy en C₁₋₆, hétérocycle saturé de 5 ou 6 chaînons ou -OC(O)R₇, de préférence hydroxyle, -OCH₃, -OCH₂CH₃, -OC(O)CH₃, méthyle ou pyrrolidine ;
R₆ est hydrogène ou alkyle en C₁₋₆, de préférence hydrogène ou méthyle ;
R₇ est alkyle en C₁₋₆, de préférence méthyle.

4. Utilisation selon l'une quelconque des revendications 1 à 3, dans laquelle les une ou plusieurs furanones sont choisies dans le groupe constitué des furanéol, (2R)-(+)-homofuranéol I, (2R)-(+)-homofuranéol II, (2S)-(-)-homofuranéol I, (2S)-(-)-homofuranéol II, sotolon, norfuranéol, abhexon, mésifuranone ou diméthoxyfuranone.

5. Utilisation selon l'une quelconque des revendications 1 à 4, dans laquelle le nucléotide, l'acide aminé et la furanone sont en outre des nucléotides, acides aminés et furanones quelconques qui peuvent être trouvés dans un composant de viande, de légume ou laitier quelconque de l'aliment.

6. Utilisation selon l'une quelconque des revendications 1 à 5, dans laquelle les un ou plusieurs nucléotides sont présents en une quantité inférieure à 100 mM, facultativement dans laquelle les un ou plusieurs acides aminés sont présents à une quantité inférieure à 1 M, facultativement dans laquelle les une ou plusieurs furanones sont présentes en une quantité inférieure à 40 ppm.

7. Aliment pour animaux comprenant un ou plusieurs nucléotides, un ou plusieurs acides aminés choisis dans le groupe constitué des glycine, alanine, cystéine, histidine, leucine, méthionine, phénylalanine, sérine, tryptophane et tyrosine, et une ou plusieurs furanones.

8. Aliment pour animaux selon la revendication 7, dans lequel les un ou plusieurs nucléotides, les un ou plusieurs acides aminés et les un ou plusieurs furanones sont dans une combinaison choisie dans le groupe constitué de :
| | | |
|---|---|---|
| GMP entre 1 et 99 % et IMP entre 1 et 99 % | Histidine | Furanéol |
| GMP entre 1 et 99 % et IMP entre 1 et 99 % | Glycine | Furanéol |
| GMP entre 1 et 99 % et IMP entre 1 et 99 % | Alanine | Furanéol |
| GMP entre 1 et 99 % et IMP entre 1 et 99 % | Histidine | Sotolon |
| GMP entre 1 et 99 % et IMP entre 1 et 99 % | Glycine | Sotolon |
| GMP entre 1 et 99 % et IMP entre 1 et 99 % | Alanine | Sotolon |
| IMP | Histidine | Furanéol |
| IMP | Glycine | Furanéol |
| IMP | Alanine | Furanéol |
| IMP | Histidine | Sotolon |
| IMP | Glycine | Sotolon |
| IMP | Alanine | Sotolon |
| GMP | Histidine | Furanéol |
| GMP | Glycine | Furanéol |
| GMP | Alanine | Furanéol |
| GMP | Histidine | Sotolon |
| GMP | Glycine | Sotolon |
| GMP | Alanine | Sotolon |
| AMP | Histidine | Furanéol |
| AMP | Glycine | Furanéol |
| AMP | Alanine | Furanéol |
| AMP | Histidine | Sotolon |
| AMP | Glycine | Sotolon |
| AMP | Alanine | Sotolon |

9. Procédé pour augmenter l'acceptation d'un aliment chez un animal de compagnie comprenant l'autorisation de l'animal à accéder à un aliment comprenant au moins un nucléotide, au moins un acide aminé choisi dans le groupe constitué des glycine, alanine, cystéine, histidine, leucine, méthionine, phénylalanine, sérine, tryptophane et tyrosine et une ou plusieurs furanones telles que définies dans l'une quelconque des revendications 7 ou 8.

10. Procédé de préparation d'un aliment pour animaux comprenant au moins un nucléotide, au moins un acide aminé choisi dans le groupe constitué des glycine, alanine, cystéine, histidine, leucine, méthionine, phénylalanine, sérine, tryptophane et tyrosine, et une ou plusieurs furanones, le procédé comprenant les étapes d'ajout et de mélange d'au moins un nucléotide, au moins un acide aminé choisi parmi glycine, alanine, cystéine, histidine, leucine, méthionine, phénylalanine, sérine, tryptophane et tyrosine et une ou plusieurs furanones avec un aliment pour animaux.

11. Procédé de préparation d'un aliment pour animaux selon la revendication 10, le procédé comprenant la combinaison d'un ou plusieurs ingrédients d'aliment pour animaux ; de l'au moins one acide aminé ; de l'au moins un nucléotide, dans lequel l'acide aminé, une ou plusieurs furanones, le nucléotide et des furanones sont ajoutées conjointement ou séparément, et dans lequel l'acide aminé, la nucléotide et les furanones ne représentent conjointement pas plus de 30 % en poids de la matière sèche qui est contenue dans l'aliment.

12. Procédé selon l'une quelconque des revendications 10 ou 11, dans lequel les un ou plusieurs ingrédients d'aliment pour animaux comprennent l'un ou plusieurs des matériaux comestibles choisis parmi la viande, la graisse animale, le plasma sanguin, la moelle osseuse, une protéine végétale, une graisse végétale, une protéine de lait, des céréales et de l'amidon, dans lequel les un ou plusieurs ingrédients comestibles représentent au moins 60 % en poids de la matière sèche qui est contenue dans l'aliment pour animaux de compagnie.

13. Procédé pour augmenter la palatabilité d'un aliment, le procédé comprenant l'ajout à un aliment, pendant ou après la fabrication, d'au moins un nucléotide, au moins un acide aminé choisi dans le groupe constitué des glycine, alanine, cystéine, histidine, leucine, méthionine, phénylalanine, sérine, tryptophane et tyrosine, et une ou plusieurs furanones.
